(19)

Europäisches
Patentamt
European
Patent Office
Office européen
des brevets

(11) **EP 2 471 829 A1**

(12) **EUROPEAN PATENT APPLICATION**
published in accordance with Art. 153(4) EPC

(43) Date of publication:
**04.07.2012 Bulletin 2012/27**

(21) Application number: **10822015.3**

(22) Date of filing: **05.10.2010**

(51) Int Cl.:
***C08G 18/40*** *(2006.01)*    ***A47C 27/14*** *(2006.01)*
***C08G 101/00*** *(2006.01)*

(86) International application number:
**PCT/JP2010/067470**

(87) International publication number:
**WO 2011/043345 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2009 JP 2009231932**

(71) Applicant: **Asahi Glass Company, Limited**
**Tokyo 100-8405 (JP)**

(72) Inventors:
• **SASAKI, Takayuki**
  **Tokyo 100-8405 (JP)**
• **KUMAGAI, Naohiro**
  **Tokyo 100-8405 (JP)**

(74) Representative: **Blodig, Wolfgang**
  **Wächtershäuser & Hartz**
  **Patentanwaltspartnerschaft**
  **Ottostrasse 4**
  **80333 München (DE)**

(54) **SOFT POLYURETHANE FOAM, METHOD FOR PRODUCING THE SAME, AND SEAT CUSHION FOR AUTOMOBILE**

(57)    To make it possible to produce a flexible polyurethane foam having a high rebound resilience and good cushioning properties while having a high biomass degree, and having no cell roughening at the skin portion, using a polyol-containing mixture having a low viscosity even though a high molecular weight polyoxyalkylene polyol is used.

A polyol (A) containing a polyoxyalkylene polyol (polyol (A1)) having a hydroxy value of from 5 to 30 mg-KOH/g, obtainable by subjecting propylene oxide (b1) to ring-opening addition polymerization to an initiator in the presence of a double metal cyanide complex catalyst (a1) having an organic ligand and then subjecting ethylene oxide (b2) to ring-opening addition polymerization in the presence of an alkali metal catalyst (a2), and a polyol (A2) derived from a natural fat/oil, and an epoxidized natural fat/oil (X) obtainable by epoxidizing a natural fat/oil having unsaturated bonds by having an oxidizing agent reacted therewith, are used.

**Description**

TECHNICAL FIELD

The present invention relates to a process for producing a flexible polyurethane foam, a flexible polyurethane foam produced by the process, and a seat cushion for an automobile using the flexible polyurethane foam.

BACKGROUND ART

A flexible polyurethane foam can be obtained by reacting a polyol and a polyisocyanate compound in the presence of a urethane-forming catalyst and a blowing agent.
A flexible polyurethane foam is used also as a material of a seat cushion for an automobile, and in such a case, it is required to have a high rebound resilience as the index of cushioning properties.
It has been known that use of a high molecular weight polyol is effective to improve the rebound resilience, and Patent Documents 1 and 2 disclose a process for producing a flexible polyurethane foam using a high molecular weight polyoxyalkylene polyol.
Further, as a flexible polyurethane foam is a chemical product derived from petroleum, carbon dioxide gas in the air will be increased after its final incineration. In recent years, in consideration of environment, there has been a demand to increase the proportion of a non-petroleum-derived material (hereinafter referred to as the biomass degree) in a flexible polyurethane foam product.
As an attempt to increase the biomass degree, Patent Document 3 discloses a process for producing a flexible polyurethane foam by using a polyoxyalkylene polyol obtained by copolymerizing propylene oxide and ethylene oxide to an initiator which is a hydroxy group-provided epoxidized soybean oil having hydroxy groups provided by ring-opening of epoxidized soybean oil in the presence of an excess of an alcohol, using potassium hydroxide which is an anionic polymerization catalyst as a polymerization catalyst.
Further, Patent Document 4 discloses a process for producing a polyurethane foam by using a polyol having hydroxy groups provided by a method of blowing air to soybean oil.

PRIOR ART DOCUMENTS

PATENT DOCUMENTS

Patent Document 1:     Japanese Patent No. 2,616,054
Patent Document 2:     Japanese Patent No. 2,616,055
Patent Document 3:      JP-A-2005-320431
Patent Document 4:      JP-A-2002-524627

DISCLOSURE OF INVENTION

TECHNICAL PROBLEM

However, even though it is attempted to produce a flexible foam having a high biomass degree by using a conventional high molecular weight polyol as disclosed in Patent Document 1 or 2 and a polyol derived from soybean oil as disclosed in Patent Document 3 or 4 in combination, according to the founding by the present inventors, the hardness of the foam tends to be high, the rebound resilience tends to be low, and the cushioning properties tend to be insufficient.
The present inventors have replaced part of the polyol derived from soybean oil as disclosed in Patent Document 4 with epoxidized soybean oil derived from a natural fat/oil and as a result, the hardness could be reduced, and the rebound resilience could be made high, without lowering the biomass degree of the flexible polyurethane foam. Further, the hysteresis loss as the index of the durability, the stress relaxation, the compression set and the compression set under humid condition were also improved. However, the present inventors have found that cell roughening occurs on the skin surface.
Under these circumstances, the present invention provides a process for producing a flexible polyurethane foam, by which a flexible polyurethane foam having a high rebound resilience and good cushioning properties and having no cell roughening on the skin surface while having a high biomass degree can be obtained, a flexible polyurethane foam produced by the process, and a seat cushion for an automobile using the flexible polyurethane foam.

SOLUTION TO PROBLEM

The present invention provides the following [1] to [13].

[1] A process for producing a flexible polyurethane foam, which comprises reacting and expansion-molding a reactive mixture containing a polyol (A) containing the following polyol (A1) and a polyol (A2) derived from a natural fat/oil, an epoxidized natural fat/oil (X) obtainable by epoxidizing a natural fat/oil having unsaturated bonds by having an oxidizing agent acted thereto, a polyisocyanate compound (B), a catalyst (C) and a blowing agent (D):

polyol (A1): a polyoxyalkylene polyol having a hydroxy value of from 5 to 30 mgKOH/g, obtainable by subjecting propylene oxide (b1) to ring-opening addition polymerization to an initiator in the presence of a double metal cyanide complex catalyst (a1) having an organic ligand, and then subjecting ethylene oxide (b2) to ring-opening addition polymerization in the presence of an alkali metal catalyst (a2).

[2] The process for producing a flexible polyurethane foam according to [1], wherein the polyol (A1) contains from 5 to 40 mass% of terminal oxyethylene groups.
[3] The process for producing a flexible polyurethane foam according to [1] or [2], wherein the mass ratio (A1)/(A2) of the polyol (A1) to the polyol (A2) derived from a natural fat/oil is from 95/5 to 30/70.
[4] The process for producing a flexible polyurethane foam according to any one of [1] to [3], wherein the proportion of the epoxidized natural fat/oil (X) is from 1 to 30 parts by mass per 100 parts by mass of the polyol (A).
[5] The process for producing a flexible polyurethane foam according to any one of [1] to [4], wherein the reactive mixture further contains a crosslinking agent (E).
[6] The process for producing a flexible polyurethane foam according to any one of [1] to [5], wherein the hydroxy value of the polyol (A2) derived from a natural fat/oil is from 20 to 250 mgKOH/g.
[7] The process for producing a flexible polyurethane foam according to any one of [1] to [6], wherein the polyol (A2) derived from a natural fat/oil is a polyol derived from soybean oil.
[8] The process for producing a flexible polyurethane foam according to any one of [1] to [7], wherein the blowing agent (D) is water.
[9] The process for producing a flexible polyurethane foam according to any one of [1] to [8], wherein as the polyisocyanate compound (B), at least one member selected from the group consisting of tolylene diisocyanate, diphenylmethane diisocyanate, polymethylene polyphenyl isocyanate and modified products thereof is used.
[10] The process for producing a flexible polyurethane foam according to any one of [1] to [9], wherein the amount of the polyisocyanate compound (B) used is such an amount that the isocyanate index is from 80 to 125.
[11] The process for producing a flexible polyurethane foam according to any one of [1] to [10], wherein the expansion-molding is carried out in a closed mold.
[12] A flexible polyurethane foam produced by the process as defined in any one of [1] to [11].
[13] A seat cushion for an automobile, using the flexible polyurethane foam as defined in [12].

ADVANTAGEOUS EFFECTS OF INVENTION

According to the production process of the present invention, a flexible polyurethane foam having a high rebound resilience and good cushioning properties, and having no cell roughening on the skin surface, while having a high biomass degree, can be obtained.
The obtained flexible polyurethane foam has a high biomass degree, has a high rebound resilience and good cushioning properties, and having no cell roughening on the skin surface, and accordingly it is particularly suitable as a seat cushion for an automobile.
Further, the obtained flexible polyurethane foam also has good durability.

DESCRIPTION OF EMBODIMENTS

"The reactive mixture" in this specification is a liquid containing, in addition to a polyol and a polyisocyanate compound, a blowing agent, a foam stabilizer, a catalyst and the like, and compound ingredients as the case requires.
In this specification, "a polyol-containing mixture" is a liquid containing a polyol, a blowing agent, a foam stabilizer, a catalyst and the like, and compounding ingredients as the case requires. The compounding ingredients in "the polyol-containing mixture" may not be the same as the compounding ingredients in "the reactive mixture", and some of the compounding ingredients in "the reactive mixture" may preliminarily be incorporated in the polyisocyanate compound (B) to be mixed with "the polyol-containing mixture".
In this specification, a compound derived from petroleum means compounds (including the same compounds prepared synthetically) present in petroleum and oil mine gas and derivatives of the compounds.

In this specification, the number average molecular weight (Mn) and the weight average molecular weight (Mw) are molecular weights as calculated as polystyrene measured by using a commercially available gel permeation chromatography (GPC) measuring apparatus.

In this specification, "the molecular weight distribution" means the ratio (Mw/Mn) of the weight average molecular weight (Mw) to the number average molecular weight (Mn).

<Polyol (A)>

The polyol (A) contains a polyol (A1) and a polyol (A2) derived from a natural fat/oil. It may further contain another polyol (A3).

[Polyol (A1)]

The polyol (A1) in the present invention is a polyoxyalkylene polyol having a hydroxy value of from 5 to 30 mgKOH/g, obtainable by subjecting propylene oxide (b1) (hereinafter sometimes referred o as PO) to ring-opening addition polymerization to an initiator in the presence of a double metal cyanide complex catalyst (hereinafter sometimes referred to as a DMC catalyst) (a1) having an organic ligand and then subjecting ethylene oxide (b2) (hereinafter sometimes referred to as EO) to ring-opening addition polymerization in the presence of an alkali metal catalyst (a2). In this specification, PO and EO may sometimes be referred to as a monomer.

In the present invention, propylene oxide (b1) to be subjected to ring-opening addition polymerization to an initiator substantially consists solely of propylene oxide, and contains no alkylene oxide (such as ethylene oxide). Likewise, ethylene oxide (b2) contains substantially no alkylene oxide other than ethylene oxide.

(Initiator)

The initiator for production of the polyol (A1) is preferably a compound derived from petroleum. The average number of active hydrogen atoms in the initiator is preferably from 2 to 8, particularly preferably from 2 to 6. When the average number of active hydrogen atoms is at least the lower limit of the above range, the durability and the riding comfortability of the flexible polyurethane foam to be obtained tend to be good. When it is at most the upper limit of the above range, the flexible polyurethane foam will not be too hard, and the foam physical properties such as elongation tend to be good.

The initiator may, for example, be specifically ethylene glycol, diethylene glycol, propylene glycol, dipropylene glycol, neopentyl glycol, 1,4-butanediol, 1,6-hexanediol, glycerin, trimethylolpropane, pentaerythritol, diglycerin, dextrose, sucrose, bisphenol A, ethylenediamine, or a low molecular weight polyoxyalkylene polyol obtainable by adding an alkylene oxide thereto. It is preferably glycerin, pentaerythritol, or a polyoxyalkylene polyol having a low molecular weight (for example, a number average molecular weight of from 300 to 20,000) obtainable by adding an alkylene oxide thereto.

(Metal cyanide complex catalyst (a1))

The double metal cyanide complex catalyst (a1) having an organic ligand may be produced by a known process. It may be produced, for example, by a process as disclosed in JP-A-2003-165836, JP-A-2005-15786, JP-A-7-196778 or JP-A-2000-513647.

Specifically, it may be produced by (1) a method of coordinating an organic ligand to a reaction product obtainable by reacting a halogenated metal salt with an alkali metal cyanometalate in an aqueous solution, separating the solid component, and further washing the separated solid component with an organic ligand aqueous solution, (2) a method of reacting a halogenated metal salt with an alkali metal cyanometalate in an organic ligand aqueous solution, separating the obtained reaction product (solid component) and further washing the separated solid component with an organic ligand aqueous solution, or the like.

In the method (1) or (2), a cake (solid component) obtained by washing the reaction product and subjecting it to separation by filtration may be re-dispersed in an organic ligand aqueous solution containing a polyether compound in an amount of at most 3 mass% based on the cake, and then volatile components are distilled off to prepare a slurry-form double metal cyanide complex catalyst. To produce a highly active polyol having a narrow molecular weight distribution by using the DMC catalyst, it is particularly preferred to use such a slurry-form DMC catalyst.

The polyether compound to be used to prepare the slurry-form catalyst is preferably a polyether polyol or a polyether monool. Specifically, it is preferably a polyether monool or a polyether polyol, each having an average of from 1 to 12 hydroxy groups per one molecule and a number average molecular weight of from 300 to 5,000 produced by subjecting an alkylene oxide to ring-opening addition polymerization to an initiator selected from a monoalcohol and a polyhydric alcohol by using an alkali metal catalyst or a cationic polymerization catalyst.

The DMC catalyst is preferably a zinc hexacyanocobaltate complex. As the organic ligand in the DMC catalyst, an alcohol, an ether, a ketone, an ester, an amine, an amide or the like may be used.

A preferred organic ligand may be tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (also called triglyme), iso-propyl alcohol or dioxane. Dioxane may be 1,4-dioxane or 1,3-dioxane but is preferably 1,4-dioxane. The organic ligands may be used alone or in combination of two or more.

Among them, the catalyst preferably has tert-butyl alcohol as the organic ligand. Accordingly, it is preferred to use a double metal cyanide complex catalyst having tert-butyl alcohol as at least part of the organic ligand. With the double metal cyanide complex catalyst having such an organic ligand, which has high activity, a polyol with a low total degree of unsaturation can be produced. Further, in a case where a highly active double metal cyanide complex catalyst is used, it is possible to reduce the amount of its use, and a polyoxyalkylene polyol before purification obtainable by subjecting propylene oxide to ring-opening addition polymerization is preferred since it has a small amount of the remaining catalyst.

(Alkali metal catalyst (a2))

The alkali metal catalyst (a2) comprises an alkali metal compound such as an alkali metal hydroxide, alkali metal carbonate or an alkali metal hydride. Such an alkali metal compound converts the hydroxy groups of the polyol to an alkali metal alcoholate, and the alkali metal ion of the alkali metal alcoholate has catalytic activity. The alkali metal catalyst (a2) is preferably an alkali metal hydroxide, and the alkali metal hydroxide is preferably, for example, sodium hydroxide (NaOH), potassium hydroxide (KOH) or cesium hydroxide (CsOH).

The hydroxy value of the polyol (A1) in the present invention is preferably from 5 to 30 mgKOH/g, preferably from 8 to 28 mgKOH/g, particularly preferably from 10 to 24 mgKOH/g.

When the hydroxy value is at least the lower limit of the above range, the viscosity of the polyol itself will not be too high, whereby good workability will be obtained. Further, when the hydroxy value is at most the upper limit of the above range, a flexible polyurethane foam to be obtained will not be too hard, and foam physical properties such as elongation will be good.

The number average molecular weight (Mn) of the polyol (A1) is preferably from 5,000 to 45,000, more preferably from 6,000 to 30,000, particularly preferably from 7,000 to 25,000. When Mn is at least the lower limit of the above range, the durability of a foam to be obtained will be good, and when it is at most the upper limit of the above range, the viscosity of the polyol itself will not be too high.

The molecular weight distribution (Mw/Mn) of the polyol (A1) is preferably from 1.010 to 1.100, particularly preferably from 1.020 to 1.080.

In the production of the polyol (A1), the amount of propylene oxide (b1) to be subjected to ring-opening addition polymerization to the initiator is preferably such that the proportion of oxypropylene groups in the aimed polyol (A1) is from 50 to 99 mass%, particularly preferably from 60 to 90 mass%. The amount of ethylene oxide to be subsequently subjected to ring-opening addition polymerization is preferably such that the proportion of terminal oxyethylene groups in the aimed polyol (A1) is from 1 to 50 mass%, particularly preferably from 5 to 40 mass%.

The polyol (A1) has a straight cap structure in which a block chain comprising oxypropylene groups is added to the initiator, and a block chain (also called terminal oxyethylene groups in this specification) comprising oxyethylene groups is added to the terminals.

In the entire polyol (A1), the proportion (content of terminal oxyethylene groups) of the block chain comprising oxyethylene groups at the terminals is preferably from 5 to 40 mass%, particularly preferably from 10 to 30 mass%.

When the proportion of the terminal oxyethylene group is at least the lower limit of the above range, the reactivity with a polyisocyanate compound will be sufficient, and when it is at most the upper limit of the above range, the reactivity with the polyisocyanate compound will not be too high, and moldability, etc. of the flexible polyurethane foam will be good.

(Process for producing polyol (A1))

The process for producing the polyol (A1) is preferably a process comprising the following initial step (hereinafter sometimes referred to as a step (a)), the following polymerization step (hereinafter sometimes referred to as a step (b)) and the following ethylene oxide ring-opening addition polymerization step (hereinafter sometimes referred to as a step (c)). This process is carried out preferably by a batch system.

Step (a)

First, to a pressure resistant reactor equipped with a stirring means and a temperature controlling means, the entire amount of the initiator and the entire amount of the DMC catalyst are put and mixed to prepare a reaction liquid. Usually, the initiator is a viscous liquid, and the DMC catalyst is in the form of particles or a slurry containing the particles. The reaction liquid may contain a polymerization solvent as the case requires. Further, the reaction liquid may contain the component added as the case requires in the DMC catalyst preparation step.

The polymerization solvent may be hexane, cyclohexane, benzene or ethyl methyl ketone. In a case where no polymerization solvent is used, the solvent removal step from the final product is unnecessary, thus increasing the productivity. Further, the catalytic activity of the DMC catalyst is decreased in some cases by the influence of the moisture or the antioxidant contained in the polymerization solvent, and such inconvenience can be prevented by not using a polymerization solvent.

In this process, "mixing" of the initiator and the DMC catalyst means a state where both are uniformly mixed as a whole, and in the step (a), it is required that they are in such a "mixed" state.

In the step (a) of this process, the mixing means is not particularly limited so long as the DMC catalyst and the initiator (including components added as the case requires) can be sufficiently mixed. The mixing means is usually stirring means. The stirring power of the stirring means is preferably from 4 to 500 kW/m$^3$, more preferably from 8 to 500 kW/m$^3$, particularly preferably from 12 to 500 kW/m$^3$. Here, the stirring power is a value calculated from a known value, and this value is a power requirement per unit liquid amount of the content, calculated from the volume and the viscosity of the content in the pressure resistant reactor, the shape of the reactor, the shape and the number of revolutions of the stirring vanes, etc. In this process, the above reaction liquid corresponds to the content in the pressure resistant reactor.

As stirring means in the step (a) in the production process of this process, specifically, stirring by stirring vanes, by bubbling by inert gas such as nitrogen gas, by electromagnetic waves or ultrasonic waves, or the like may be mentioned, and stirring by the stirring vanes is preferred. As a preferred example of the stirring vanes, the stirring vanes disclosed in JP-A-2003-342361 may be mentioned. The stirring vanes are particularly preferably large-scaled vanes, and the large-scaled vanes such as FULLZONE (registered trademark) vanes manufactured by Shinko Pantec Co., Ltd., or MAXBLEND (registered trademark) vanes manufactured by Sumitomo Heavy Industries, Ltd. may be mentioned. Further, paddle vanes, pitched paddle vanes, turbine vanes and propeller vanes may, for example, be used, and at that time, the radius of the stirring vanes is in a range of preferably from 20 to 99%, more preferably from 30 to 90%, particularly preferably from 40 to 80% to the inner radius (the radius of the inside) of the pressure resistant reactor. The larger the radius of the stirring vane becomes, the larger the shearing stress becomes, and therefore the chance of contact of the viscous liquid (initiator) and the particles (the DMC catalyst) will be increased. Accordingly, the step (a) in this process is carried out preferably in a pressure resistant reactor equipped with stirring means having a large radius of stirring vanes.

The shape and the material of the pressure resistant reactor to be used in the step (a) of this process are not particularly limited, however, as the material, a container made of heat resistant glass or a metal is preferred.

Then, preferably, the interior in the pressure resistant reactor is replaced with nitrogen, whereby oxygen in the reaction liquid is removed. The amount of oxygen in the reaction liquid is preferably at most 1 mass% based on the amount of nitrogen.

In the step (a) of this process, the pressure in the pressure resistant reactor is preferably at most 0.020 MPa by the absolute pressure. It is more preferably at most 0.015 MPa by the absolute pressure, particularly preferably at most 0.010 MPa by the absolute pressure. If it exceeds 0.020 MPa by the absolute pressure, a pressure increase along with a decrease in the space volume in the pressure resistant reactor along with the ring-opening addition polymerization tends to be intense. Further, evacuation of the pressure resistant reactor does not lead to an effect of improving the activity of the catalyst, but may be carried out if necessary in the process if the moisture content in the initiator is too high.

Then, the reaction liquid is heated with stirring, and then in a state where the temperature of the reaction liquid is at the predetermined initial temperature, propylene oxide is supplied and reacted (initial step). In this specification, the initial temperature means a temperature of the reaction liquid when supply of propylene oxide is started.

The initial temperature of the reaction liquid is preferably from 120 to 165°C, more preferably from 125 to 150°C, particularly preferably from 130 to 140°C. When the initial temperature of the reaction liquid is at least the lower limit of the above range, the catalytic activity will be remarkably good, and when it is at most the upper limit of the above range, thermal decomposition of components themselves contained in the reaction liquid will not occur.

Specifically, it is preferred that the reaction liquid is heated to the initial temperature with stirring, and supply of propylene oxide is started in a state where the temperature of the reaction liquid is maintained. For example, heating is stopped when the reaction liquid reaches the predetermined initial temperature, and supply of propylene oxide is started before the temperature of the reaction liquid starts decreasing. The time after heating is stopped until supply of propylene oxide is started is not particularly limited but is preferably within one hour in view of the efficiency.

The heating time to heat the reaction liquid to the predetermined temperature is preferably from 10 minutes to 24 hours, particularly preferably from 15 minutes to 2 hours. When the heating time is at least the lower limit of the above range, the reaction liquid can uniformly be heated, and when it is at most the upper limit of the above range, such is efficient in view of time.

The propylene oxide in the step (a) is part of propylene oxide (b1) subjected to ring-opening addition polymerization to the initiator, in production of the polyol (A1).

In the initial step, if the amount of supply of propylene oxide is too small, the activation of the DMC catalyst tends to be insufficient, and if it is too large, runaway reaction may occur. Thus, it is preferably from 5 to 20 parts by mass per 100 parts by mass of the initiator contained in the reaction liquid. It is more preferably from 8 to 15 parts by mass, particularly preferably from 10 to 12 parts by mass.

Supply of propylene oxide in the step (a) is carried out in a state where the pressure resistant reactor is sealed. When propylene oxide is supplied to the reaction liquid, immediately after the supply, the internal pressure of the pressure resistant reactor will be increased along with vaporization of unreacted propylene oxide. Then, once the DMC catalyst is activated, a reaction of propylene oxide with the initiator occurs, and simultaneously with the start of the decrease in the internal pressure of the pressure resistant reactor, the temperature of the reaction liquid is increased by the heat of reaction. After completion of the reaction of the entire amount of propylene oxide supplied, the internal pressure of the pressure resistant reactor is decreased to the same level as before the supply, and an increase in the temperature of the reaction liquid by the heat of reaction no more occurs.

In this specification, the step (a) i.e. the initial step is a step from initiation of the supply of propylene oxide to completion of the reaction of propylene oxide. Completion of the reaction of propylene oxide can be confirmed by a decrease in the internal pressure of the pressure resistant reactor. That is, completion of the initial step is at a time where the internal pressure of the pressure resistant reactor is decreased to the same level as before supply of the monomer. The time of the initial step is preferably from 10 minutes to 24 hours, particularly preferably from 15 minutes to 3 hours. When it is at least the lower limit of the above range, the DMC catalyst can be activated, and when it is at most the upper limit of the above range, such is efficient in view of time.

In this process, the maximum temperature of the reaction liquid in the step (a) is preferably higher by from 15˚C to 50˚C than the initial temperature of the reaction liquid. The maximum temperature is more preferably higher by at least 20˚C, particularly preferably higher by at least 25˚C, than the initial temperature. Since the heat release by the reaction of propylene oxide with the initiator is large, usually the temperature of the reaction liquid is increased to the maximum temperature which is higher by at least 15˚C than the initial temperature even without heating, and whereafter, the temperature is gradually decreased even without cooling. The larger the amount of propylene oxide, the larger the temperature increase of the reaction liquid by the heat of reaction. Cooling of the reaction liquid may be conducted as the case requires, for example, when the temperature is too increased. After the reaction liquid reaches the maximum temperature, the reaction liquid is preferably cooled so as to shorten the time required for the temperature decrease.

Cooling may be carried out, for example, by a method of providing a cooling pipe through which a coolant flows in the reaction liquid to carry out heat exchange. In such a case, the temperature of the reaction liquid can be controlled by the temperature of the coolant, the coolant flow rate, and the timing of flow of the coolant.

By increasing the temperature of the reaction liquid to a temperature higher by at least 15˚C than the initial temperature, the molecular weight distribution of a polyol (A1) to be obtained can be made narrower. A maximum temperature of the reaction liquid higher by more than 50˚C than the initial temperature is unfavorable in view of the pressure resistant structure of the reactor.

The maximum temperature is preferably from 135 to 180˚C, more preferably from 145 to 180˚C, particularly preferably from 150 to 180˚C.

It is preferred that the temperature of the reaction liquid in the step (a) is kept to be a temperature of at least the initial temperature after it is increased along with the reaction of propylene oxide with the initiator and reaches the maximum temperature until the reaction of propylene oxide is completed, more preferably, it is kept to a temperature higher by at least 15˚C than the initial temperature.

Step (b)

After completion of the step (a), while propylene oxide is newly supplied, the temperature of the reaction liquid is adjusted to a predetermined polymerization temperature with stirring to carry out the polymerization reaction thereby to obtain an intermediate formed by ring-opening addition polymerization of propylene oxide (b1) to the initiator. The total amount of propylene oxide reacted in the step (a) and in this step (b) is the amount of propylene oxide (b1).

As the pressure resistant reactor used in the step (b) of this process, a pressure resistant autoclave container is preferably used, but in a case where the boiling point of the monomer is high, it may not be pressure resistant. As propylene oxide (b1) has a low boiling point of about 34˚C, a high pressure resistant container is preferred. The material is not particularly limited. Further, as the reactor, the container used in the above step (a) may be used as it is.

In the step (b) in this process, at the time of the reaction of the initiator with the monomer in the presence of the DMC catalyst, the reaction liquid is preferably stirred by means of a stirring power of preferably from 4 to 500 kW/m$^3$, more preferably from 8 to 500 kW/m$^3$, particularly preferably from 12 to 500 kW/m$^3$, in the same manner as the mixing means in the step (a). As the stirring vanes, propeller vanes, paddle vanes, MAXBLEND vanes or disk turbine vanes may be used, and large-scaled vanes are preferred to uniformly mix the content in the reactor. Further, a disper, a homomixer, a colloid mill, a Nauta mixer or the like used for emulsification or dispersion may also be used. Further, mixing by ultrasonic waves may be employed without using the stirring vanes. Such stirring methods may be combined. In a case where a common stirring method of using the stirring vanes is employed, the speed of revolution of the stirring vanes is preferably as high as possible within a range where a large amount of gas of the vapor phase in the reactor is not included in the reaction liquid so that the stirring efficiency is not decreased.

In the step (b) of this process, the addition polymerization reaction method is preferably a batch method, however, a continuous method may also be employed wherein addition of the reaction mixture containing propylene oxide and the DMC catalyst after the above step (a) and withdrawal of the above intermediate as the product are carried out simultaneously. Particularly when the initiator has an average molecular weight per one hydroxy group of at most 300, the continuation method is preferred.

When propylene oxide is supplied in the step (b), immediately after the supply, the internal pressure of the pressure resistant reactor is increased along with vaporization of unreacted propylene oxide. Then, the reaction of further ring-opening addition polymerization of propylene oxide to the reaction product in the step (a) occurs, and simultaneously with the start of a decrease in the internal pressure of the pressure resistant reactor, heat of reaction is generated. After completion of the reaction of the entire amount of propylene oxide supplied, the internal pressure of the pressure resistant reactor is decreased to the same level as before supply of propylene oxide.

The completion of the reaction of propylene oxide supplied in the step (b) can be confirmed by a decrease in the internal pressure of the pressure resistant reactor.

The temperature (polymerization temperature) of the reaction liquid when propylene oxide is reacted in the step (b) is preferably from 125 to 180°C, particularly preferably from 125 to 160°C. When the polymerization temperature is at least the lower limit of the above range, a favorable reaction rate will be obtained, and the amount of remaining unreacted product in the final product can be reduced. Further, when the polymerization temperature is at most the upper limit of the above range, high activity of the DMC catalyst can favorably be maintained, and the molecular weight distribution can be made narrow.

After completion of the reaction of propylene oxide supplied in the step (b), it is preferred that the reaction liquid is cooled and purification of the reaction product is carried out.

The supply rate of propylene oxide is preferably as low as possible, whereby the molecular weight distribution of a polymer to be obtained can be made narrow, however, such lowers the production efficiency, and accordingly the supply rate is preferably set balancing them. A specific supply rate is preferably from 1 to 200 mass%/hr to the entire mass of the assumed intermediate. Further, the supply rate may successively be changed during the polymerization reaction.

The reaction time in the step (b) of this process is preferably from 10 minutes to 40 hours, particularly preferably from 30 minutes to 24 hours. When it is at least the lower limit of the above range, the reaction can be controlled. The reaction time of at most the upper limit of the above range is preferred in view of the efficiency.

The pressure of the pressure resistant reactor in the step (b) of this process is preferably at most 1 MPa by the absolute pressure, particularly preferably 0.8 MPa, in view of easiness of the operation and the equipment.

Step (c)

Then, the alkali metal catalyst (a2) is reacted with the obtained intermediate to alkoxylate hydroxy groups of the formed product, and ethylene oxide (b2) is further supplied and subjected to ring-opening addition polymerization, whereby the polyol (A1) is obtained.

The amount of the alkali metal catalyst (a2) to be used for polymerization reaction may be any amount so long as it is an amount required for ring-opening addition polymerization of ethylene oxide (b2), but is preferably as small as possible. The amount of use is preferably at a level of 3,000 ppm to the entire mass of the polyol (A1) to be obtained.

The reaction temperature of ethylene oxide (b2) is preferably from 30 to 160°C, more preferably from 50 to 150°C, particularly preferably from 60 to 150°C. When the reaction temperature is within the above range, ring-opening addition polymerization of ethylene oxide (b2) will favorably proceed.

The reaction of ethylene oxide (b2) is carried out preferably with stirring. Further, the above polymerization solvent may be used.

The rate of supply of ethylene oxide (b2) is preferably from 1 to 200 mass%/hr based on the entire mass of the aimed polyol (A1). The supply rate may successively be changed during the reaction.

Further, the polyol (A1) obtained by this process may be subjected to deactivation of the DMC catalyst, or removal of the DMC catalyst or the alkali metal catalyst as the case requires. The method may, for example, be an adsorption method using an adsorbent selected from synthetic silicate (such as magnesium silicate or aluminum silicate), an ion exchange resin, activated white earth and the like, a neutralization method by an amine, an alkali metal hydroxide, phosphoric acid, an organic acid or its salt such as lactic acid, succinic acid, adipic acid or acetic acid, or an inorganic acid such as sulfuric acid, nitric acid or hydrochloric acid, or a combination of the neutralization method and the adsorption method.

To the polyol (A1) thus obtained, a stabilizer may be added as the case requires to prevent deterioration during long term storage.

The stabilizer may be a hindered phenol type antioxidant such as BHT (dibutylhydroxytoluene).

In this process, by carrying out the initial activation step at a specific temperature, the molecular weight distribution (Mw/Mn) of the polyol (A1) to be obtained can be made narrower. The reduction in the molecular weight distribution (Mw/Mn) contributes to a decrease in the viscosity of the polyol (A1).

Particularly the polyol (A1) having a low hydroxy value and a high molecular weight has a larger amount of a high molecular weight product having a number average molecular weight of at least 100,000 as the molecular weight distribution becomes wider, and thereby has a remarkably high viscosity, and accordingly the effect of lowering the viscosity is likely to be obtained by making the molecular weight distribution narrow.

According to this process, a high molecular weight polyol (A1) having a hydroxy value of from 5 to 30 mgKOH/g and a molecular weight distribution of from 1.010 to 1.100 can be produced.

The reason why a polyol (A1) having a narrow molecular weight distribution can be obtained by this process is not clearly understood but is estimated as follows. The DMC catalyst can be obtained only as an agglomerate with no catalytic activity when prepared. Thus, for the ring-opening addition polymerization using the DMC catalyst, activation is essential. By the activation, the agglomerate is pulverized, whereby the surface area of the DMC catalyst is increased and the catalytic activity develops. At this activation, by activation under conditions where a maximum temperature higher than the initial temperature is achieved by using the initiator, the DMC catalyst and propylene oxide, pulverization of the DMC catalyst agglomerate is more efficiently carried out, and the catalytic activity will be more improved. Further, when propylene oxide is newly supplied after the catalyst activation and is subjected to ring-opening addition polymerization, the high activity of the DMC catalyst will favorably be maintained until completion of the polymerization reaction, and a polymer having a uniform molecular weight is considered to be formed in a large amount.

[Polyol (A2) derived from natural fat/oil]

The polyol (A2) derived from a natural fat/oil in the present invention is a polymer having hydroxy groups imparted by a chemical reaction to a natural fat/oil having no hydroxy group.

The polyol (A2) derived from a natural fat/oil is preferably one obtained by blowing air or oxygen to a natural fat/oil to cause oxidative crosslinking between unsaturated bonds and at the same time, to have hydroxy groups provided, or one obtained by epoxidizing unsaturated double bonds of a natural fat/oil by having an oxidizing agent reacted therewith, followed by ring-opening in the presence of an active hydrogen compound to have hydroxy groups provided.

As a natural fat/oil as the material of the polyol (A2) derived from a natural fat/oil, a natural fat/oil other than a natural fat/oil having hydroxy groups is preferred. The natural fat/oil or a natural fat/oil component having hydroxy groups may, for example, be castor oil or phytosterol. Phytosterol is a plant sterol and is a natural fat/oil component having hydroxy groups. However, in the natural fat/oil having no hydroxy group, as the material of the polyol (A2) derived from a natural fat/oil, a slight amount of a natural fat/oil or a natural fat/oil component having hydroxy groups may be contained. For example, a vegetable oil such as soybean oil or canola oil usually contains a very small amount of phytosterol, and a vegetable oil such as soybean oil or canola oil, containing such a very small amount of phytosterol may be used as the material of the polyol (A2) derived from a natural fat/oil.

The natural fat/oil is preferably a natural fat/oil containing a fatty acid glycerate having unsaturated double bonds. As its specific examples, the same natural fat/oil for the after-mentioned epoxidized natural fat/oil (X) may be mentioned. Soybean oil is particularly preferred since it is inexpensive. That is, as the polyol (A2) derived from a natural fat/oil, a polyol derived from soybean oil is preferred.

The polyol (A2) derived from a natural fat/oil has a hydroxy value of preferably from 20 to 250 mgKOH/g, particularly preferably from 30 to 250 mgKOH/g. The castor oil usually has a hydroxy value of from 155 to 177 mgKOH/g. A natural fat/oil having substantially no hydroxy groups has a hydroxy value of at most 10 mgKOH/g since it has substantially no hydroxy groups. By providing the natural fat/oil having no hydroxy groups with hydroxy groups by chemical reaction, it is possible to adjust the hydroxy value to from 20 to 250 mgKOH/g.

When the polyol (A2) derived from a natural fat/oil has a hydroxy value of at least the lower limit of the above range, the crosslinking reactivity tends to be high, whereby sufficient foam physical properties can be obtained. When the polyol (A2) derived from a natural fat/oil has a hydroxy value of at most the upper limit of the above range, the flexibility of a flexible polyurethane foam to be obtained tends to be good and the biomass degree tends to be high.

The polyol (A2) derived from a natural fat/oil has a molecular weight distribution of preferably at least 1.2.

Castor oil and phytosterol have a molecular weight distribution of at most 1.1. However, if a natural fat/oil having no hydroxy group is provided with hydroxy groups by chemical reaction, the molecular weight distribution becomes at least 1.2, and making it smaller than that is difficult with current technologies.

The polyol (A2) derived from a natural fat/oil has a molecular weight distribution of more preferably at most 20, particularly preferably at most 15, from the viewpoint of flowability of the polyol.

The polyol (A2) derived from a natural fat/oil has a number average molecular weight (Mn) of preferably at least 800, more preferably at least 1,000, particularly preferably at least 1,200, from the viewpoint of the compatibility of the polyol or foam physical properties.

The upper limit of the weight average molecular weight (mw) of the polyol (A2) derived from a natural fat/oil is preferably at most 500,000, particularly preferably at most 100,000, from the viewpoint of flowability of the polyol.

A method for producing the polyol (A2) derived from a natural fat/oil may, for example, be the following methods (i) to (vi), and the method (i) or (ii) is preferred from the viewpoint of the cost.

(i) A method wherein air or oxygen is blown in a natural fat/oil.
(ii) A method wherein after a natural fat/oil is epoxidized, the epoxy rings are ring-opened to have hydroxy groups provided.
(iii) A method wherein after unsaturated double bonds of a natural fat/oil are reacted with carbon monoxide and hydrogen in the presence of a special metal catalyst to form carbonyl, hydrogen is further reacted therewith to have primary hydroxy groups provided.
(iv) A method wherein after the method (i), the method (ii) or (iii) is carried out to provide remaining double bonds with hydroxy groups.
(v) A method wherein after the method (ii) or (iii), the method (i) is carried out to provide remaining double bonds with hydroxy groups.
(vi) A polyester polyether polyol obtained by subjecting an alkylene oxide to ring-opening addition polymerization after the natural fat/oil is provided with hydroxy groups by any of the methods (i) to (v).

Method (i):

This is a method wherein air or oxygen is blown in a natural fat/oil to cause oxidative crosslinking between unsaturated double bonds and at the same time, to have hydroxy groups provided. Further, a polyhydric alcohol may be introduced by a transesterification reaction.

In method (i), depending on the type of a natural oil/fat to be used as a material and the oxidation state during blowing, the molecular weight and the hydroxy value of the polyol (A2) derived from a natural fat/oil may be adjusted.

In a case where soybean oil is used as a material in method (i), the number average molecular weight (Mn) of the polyol (A2) derived from a natural fat/oil is usually at least 800, preferably from 1,000 to 500,000, particularly preferably from 1,200 to 100,000. When the number average molecular weight (Mn) of the polyol (A2) derived from a natural fat/oil is at least 800, oxidative crosslinking and hydroxy groups are sufficiently formed, and crosslinkability tends to be good. When the number average molecular weight (Mn) of the polyol (A2) derived from a natural fat/oil is at most 500,000, the flowability of the polyol tends to be good.

In a case where soybean oil is used as a material in method (i), the molecular weight distribution (Mw/Mn) of the polyol (A2) derived from a natural fat/oil is usually at least 2, preferably from 3 to 15.

The commercial products of the polyol (A2) derived from a natural fat/oil (aerated soybean oil) produced by method (i) using soybean oil as a material may, for example, be Soyol series manufactured by Urethane Soy Systems Company.

Method (ii):

This is a method wherein unsaturated double bonds of a natural fat/oil are epoxidized by having an oxidizing agent reacted therewith, followed by ring-opening in the presence of an active hydrogen compound to have hydroxy groups provided by using a cationic polymerization catalyst. As the oxidizing agent, a peroxide such as peracetic acid is used. As the compound having unsaturated double bonds of a natural fat/oil epoxidized by having an oxidizing agent reacted therewith, the after-mentioned epoxidized natural fat/oil (X) may be used.

As the cationic polymerization catalyst, boron trifluoride diethyl etherate ($BF_3Et_2O$) may, for example, be mentioned.

As the active hydrogen compound, the following compounds may be mentioned.

Water, a monohydric alcohol, a polyhydric alcohol, a saccharide, a polyoxyalkylene monool, a polyoxyalkylene polyol, a polyester polyol, a polyetherester polyol, a monovalent carboxylic acid, a multivalent carboxylic acid, hydroxycarboxylic acid and/or its condensate, a primary amine, a secondary amine, hydroxy amine or alkanolamine may, for example, be mentioned. From the viewpoint of its low cost and easiness of handling, water and/or a monohydric alcohol are preferred, and water and/or methanol are particularly preferred.

The reaction to provide hydroxy groups by ring-opening the epoxidized soybean oil, can be carried out by a process wherein after the epoxidized soybean oil is dropwise added to a mixed solution of the cationic polymerization catalyst and the active hydrogen compound, the cationic polymerization catalyst is removed by an adsorption filtration.

In method (ii), it is possible to adjust the hydroxy value of the polyol (A2) derived from a natural fat/oil by the epoxy equivalent of an epoxidized natural fat/oil. It is possible to adjust the epoxy equivalent of an epoxidized natural fat/oil by e.g. the iodine value of a natural fat/oil used as a material, the amount of the oxidizing agent to the iodine value, reactivity, etc.

In method (ii), it is possible to adjust the molecular weight of the polyol (A2) derived from a natural fat/oil by the amount of the active hydrogen compound during providing hydroxy groups. If the amount of the active hydrogen compound is remarkably large, it is possible to make the molecular weight small, however, the reactivity tends to be bad and the cost tends to be high. Further, as soon as the molecular weight distribution becomes less than 1.2, drawbacks occur such that the molecular weight between crosslinking points is also decreased and the flexibility of the obtained flexible polyurethane foam is decreased. If the amount of the active hydrogen compound is too small, ring-opening polymerization reaction of the epoxidized natural fat/oil may proceed, whereby the molecular weight may rapidly be increased, and the molecules may be gelled.

In a case where epoxidized soybean oil is used as a material in method (ii), the number average molecular weight (Mn) of the polyol (A2) derived from a natural fat/oil is usually at least 800, preferably from 1,000 to 10,000.

In a case where epoxidized soybean oil is used as a material in method (ii), the molecular weight distribution (Mw/Mn) of the polyol (A2) derived from a natural fat/oil is usually at least 1.2, preferably from 1.2 to 5.

In the polyol (A), the mass ratio (A1)/(A2) of the polyol (A1) to the polyol (A2) derived from a natural fat/oil is preferably from 95/5 to 30/70, particularly preferably from 90/10 to 50/50. If the proportion of the polyol (A1) is lower than the above range, the foaming properties of the flexible foam to be obtained tend to be poor, and if the proportion of the polyol (A2) derived from a natural fat/oil is lower than the above range, the effect of suppressing formation of carbon dioxide gas at the time of final incineration of the flexible polyurethane foam tends to be low.

[Another polyol (A3)]

The polyol (A) may contain another polyol (A3) not included in either category of the polyol (A1) and the polyol (A2) derived from a natural fat/oil, within a range not to impair the effects of the present invention.

Such another polyol (A3) may, for example, be another polyoxyalkylene polyol not included in the polyol (A1), a polymer-dispersed polyol, a polyester polyol or a polycarbonate polyol. They may be selected from known products. Such another polyol (A3) may be used alone or in combination of two or more.

Such another polyol (A3) is preferably one having an average of from 2 to 8 functional groups and a hydroxy value of from 20 to 160 mgKOH/g. When the average number of functional groups is at least 2, the durability and the riding comfortability of the foam tend to be good, and when it is at most 8, mechanical properties of the flexible polyurethane foam to be produced tend to be good. Further, when the hydroxy value is at least 20 mgKOH/g, the viscosity tends to be low, whereby good workability will be achieved. When the hydroxy value is at most 160 mgKOH/g, mechanical properties of the flexible polyurethane foam to be produced tend to be good.

The weight average molecular weight (Mw) of another polyol (A3) is preferably from 700 to 22,000, more preferably from 1,500 to 20,000, particularly preferably from 2,000 to 15,000.

The amount of use of another polyol (A3) is preferably from 0 to 70 parts by mass, more preferably from 3 to 50 parts by mass, particularly preferably from 5 to 30 parts by mass per 100 parts by mass of the polyol (A), in view of the durability of the foam.

[Polymer-dispersed polyol]

As another polyol (A3), it is preferred to use a polymer-dispersed polyol. The polymer-dispersed polyol is one having polymer particles dispersed in a base polyol, and by using it, the hardness, the air flow and other physical properties of the flexible polyurethane foam can be improved.

The polymer-dispersed polyol is obtainable by polymerizing a monomer in the base polyol to form polymer particles. The base polyol is preferably a polyoxyalkylene polyol having an average of from 2 to 8 functional groups and a hydroxy value of from 20 to 160 mgKOH/g. It is particularly preferred that the base polyol contains oxyethylene groups. The content of terminal oxyethylene groups contained in the base polyol is more preferably from 5 to 30 mass%, particularly preferably from 5 to 20 mass%.

The polymer of the polymer particles may be an addition polymerization type polymer or a condensation polymerization type polymer.

The addition polymerization type polymer may, for example, be a homopolymer or copolymer of a vinyl monomer (for example, acrylonitrile, styrene, a methacrylate or an acrylate).

The condensation polymerization type polymer may, for example, be polyester, polyurea, polyurethane or melamine.

The hydroxy value of the polymer-dispersed polyol is calculated from the mass change as between before and after the polymerization of the monomer in accordance with the following formula (1).

$$\text{Hydroxy value} = \frac{(\text{hydroxy value of base polyol}) \times (\text{amount of base polyol charged})}{(\text{mass of obtained polymer-dispersed polyol})} \qquad (1)$$

The hydroxy value of the entire polymer-dispersed polyol is generally lower than the hydroxy value of the base polyol.

The hydroxy value of the polymer-dispersed polyol is preferably from 15 to 80 mgKOH/g, particularly preferably from 20 to 40 mgKOH/g.

<Epoxidized natural fat/oil (X)>

The epoxidized natural fat/oil (X) is obtained by epoxidizing unsaturated double bonds of a natural fat/oil by having an oxidizing agent reacted therewith. The epoxidized natural fat/oil (X) contains substantially no hydroxy groups.

The oxidizing agent may be a peroxide such as acetic peroxide. The method of epoxidation by the oxidizing agent may be a known method.

As the natural fat/oil, one containing a fatty acid glycerate having unsaturated double bonds is used. The natural fat/oil may, for example, be linseed oil, safflower oil, soybean oil, tung oil, poppy oil, canola oil, sesame oil, rice oil, camellia oil, olive oil, tall oil, palm oil, cotton oil, corn oil, fish oil, beef tallow or lard.

The natural fat/oil has an iodine value of preferably from 50 to 200, particularly preferably from 100 to 150 by the measurement in accordance with JIS K 0070. A natural fat/oil having a high iodine value has a high content of unsaturated acids.

The natural fat/oil having an iodine value of at least 50 may, for example, be linseed oil, safflower oil, soybean oil, tung oil, poppy oil, canola oil, sesame oil, rice oil, camellia oil, olive oil, tall oil, cotton oil, corn oil, fish oil or lard.

The natural fat/oil having an iodine value of at least 100 may, for example, be linseed oil, safflower oil, soybean oil, tung oil, poppy oil, canola oil, sesame oil, rice oil, tall oil, cotton oil, corn oil or fish oil, and soybean oil is preferred since it is inexpensive.

The epoxidized natural fat/oil (X) may be used alone or in combination of two or more.

The epoxidized natural fat/oil (X) may also be available as a commercial product, and as a commercial product of the epoxidized soybean oil, ADK CIZER-O-130P manufactured by ADEKA CORPORATION, may, for example, be mentioned.

The amount of use of the epoxidized natural fat/oil (X) is preferably from 1 to 30 parts by mass, particularly preferably from 1 to 20 parts by mass per 100 parts by mass of the polyol (A). When it is at least the lower limit of the above range, an effect of lowering the viscosity will be obtained, and when it is at most the upper limit of the above range, crosslinking of the flexible polyurethane foam tends to be sufficient.

<Another high-molecular-weight active hydrogen compound>

As a compound to be reacted with the polyisocyanate compound (B), it is possible to use the polyol (A) and another high-molecular-weight active hydrogen compound in combination.

Such another high-molecular-weight active hydrogen compound may, for example, be a high-molecular-weight polyamine having at least 2 primary amino groups or secondary amino groups; a high-molecular-weight compound having at least one primary amino group or secondary amino group and at least one hydroxy group; or a piperazine polyol.

The high-molecular-weight polyamine or the high-molecular-weight compound may be a compound obtained by converting some or all hydroxy groups in a polyoxyalkylene polyol to amino groups; or a compound obtained in such a manner that a prepolymer having isocyanate groups at its terminals, is obtained by reacting a polyoxyalkylene polyol with an excess equivalent of a polyisocyanate compound, and the isocyanate groups of the prepolymer are converted to amino groups by hydrolysis.

The piperazine polyol is a polyoxyalkylene polyol obtainable by subjecting an alkylene oxide to ring-opening addition polymerization to piperazines.

The piperazines mean piperazine or a substituted piperazine wherein a hydrogen atom in the piperazine is substituted by an organic group such as an alkyl group or an aminoalkyl group.

The piperazines are required to have at least two active hydrogen atoms.

In the piperazine polyol, two nitrogen atoms constituting a piperazine ring constitute tertiary amines.

The piperazines may be piperazine, alkyl piperazines in which a hydrogen atom bonded to a carbon atom constituting the ring is substituted by a lower alkyl group (such as 2-methylpiperazine, 2-ethylpiperazine, 2-butylpiperazine, 2-hexylpiperazine, 2,5-, 2,6-, 2,3- or 2,2-dimethylpiperazine or 2,3,5,6- or 2,2,5,5-tetramethylpiperazine) or N-aminoalkylpiperazines in which a hydrogen atom bonded to a nitrogen atom constituting the ring, is substituted by an aminoalkyl group (such as N-(2-aminoethyl)piperazine). Among them, substituted piperazines are preferred, and substituted piperazines having at least 3 nitrogen atoms in its molecule, such as piperazine having hydrogen substituted by e.g. an aminoalkyl group are more preferred.

Further, as the substituted piperazines, N-substituted piperazines are preferred, N-aminoalkylpiperazines are more preferred, and N-(aminoethyl)piperazine is particularly preferred.

An alkylene oxide to be subjected to ring-opening addition polymerization to such piperazines, is preferably an alkylene oxide having at least 2 carbon atoms, such as ethylene oxide, propylene oxide, 1,2-butylene oxide, 2,3-butylene oxide or styrene oxide.

The molecular weight per functional group of such another high-molecular-weight active hydrogen compound is preferably at least 400, particularly preferably at least 800. The molecular weight per functional group is preferably at most 5,000.

The average number of functional groups of such another high-molecular-weight active hydrogen compound is preferably from 2 to 8.

The proportion of such another high-molecular-weight active hydrogen compound is preferably at most 20 mass%, based on the total amount (100 mass%) of the polyol (A) and another high-molecular-weight active hydrogen compound. When the proportion of such another high-molecular-weight active hydrogen compound is at most 20 mass%, the reactivity with the polyisocyanate compound (B) will not be too high, whereby the moldability or the like of the flexible polyurethane foam tends to be good.

<Polyisocyanate compound (B)>

The polyisocyanate compound (B) may, for example, be an aromatic polyisocyanate compound having at least 2 isocyanate groups, a mixture of two or more of such compounds, or a modified polyisocyanate obtained by modifying it. Specifically, it is preferably at least one member selected from the group consisting of tolylene diisocyanate (TDI), diphenylmethane diisocyanate (MDI), polymethylene polyphenyl isocyanate (common name: polymeric MDI) and modified products thereof. The modified products may, for example, be a prepolymer modified product, a nurate modified product, an urea modified product and a carbodiimide modified product.

The total amount of MDI and polymeric MDI in the polyisocyanate compound (B) to be used is preferably more than 0 mass% and at most 100 mass%, more preferably from 5 to 80 mass%, particularly preferably from 10 to 60 mass%, based on polyisocyanate compound (B) (100 mass%). When the total amount of MDI and polymeric MDI is at most 80 mass%, the foam physical properties such as durability, touch of a foam, etc. become good. The remaining polyisocyanate compound (B) is preferably TDI.

The polyisocyanate compound (B) may be a prepolymer. The prepolymer may be a prepolymer of TDI, MDI or polymeric MDI with a polyol derived from a natural fat/oil, a polyoxyalkylene polyol having an alkylene oxide subjected to ring-opening addition polymerization to the polyol derived from a natural fat/oil, or a polyoxyalkylene polyol derived from petroleum.

The amount of the polyisocyanate compound (B) used is preferably such an amount that the isocyanate index is from 70 to 125, particularly preferably from 80 to 120. The isocyanate index is a value represented by 100 times of the number of isocyanate groups based on the total active hydrogen of the polyol (A), another high-molecular-weight active hydrogen compound, a crosslinking agent (E), water, and the like.

<Catalyst (C)>

The catalyst (C) is a catalyst to accelerate a urethane-forming reaction.

As the catalyst (C), an amine compound, an organic metal compound, a reactive amine compound or a metal carboxylate may, for example, be mentioned. Such catalysts (C) may be used alone or in combination as a mixture of two or more of them.

As the amine compound, triethylenediamine, a dipropylene glycol solution of bis-((2-dimethylamino)ethyl)ether and an aliphatic amine such as morpholine may, for example, be mentioned.

The reactive amine compound is a compound wherein a part of the amine compound structure is converted to a hydroxy group or an amino group so as to be reactive with an isocyanate group.

As the reactive amine compound, dimethylethanolamine, trimethylaminoethylethanolamine and dimethylaminoethoxyethoxyethanol may, for example, be mentioned.

The amount of the amine compound or the reactive amine compound used as the catalyst (C), is preferably at most 2 parts by mass, particularly preferably from 0.05 to 1.5 parts by mass, per 100 parts by mass in total of the polyol (A) and another high-molecular-weight active hydrogen compound.

The organic metal compound may, for example, be an organic tin compound, an organic bismuth compound, an organic lead compound or an organic zinc compound. Specific examples may be di-n-butyltin oxide, di-n-butyltin dilaurate, di-n-butyltin, di-n-butyltin diacetate, di-n-octyltin oxide, di-n-octyltin dilaurate, monobutyltin trichloride, din-butyltin dialkyl mercaptan, and di-n-octyltin dialkyl mercaptan.

The amount of the organic metal compound is preferably at most 2 parts by mass, particularly preferably from 0.005 to 1.5 parts by mass, per 100 parts by mass in total of the polyol (A) and another high-molecular-weight active hydrogen compound.

<Blowing agent (D)>

As the blowing agent (D), preferred is at least one member selected from the group consisting of water and an inert gas.

In view of handling efficiency and reduction in the environmental burden, water alone is preferred.

As the inert gas, air, nitrogen gas or liquified carbon dioxide gas may be mentioned.

The amount of such a blowing agent (D) may be adjusted depending on the requirement such as a blowing magnification.

When only water is used as the blowing agent, the amount of water is preferably at most 10 parts by mass, particularly preferably from 0.1 to 8 parts by mass, per 100 parts by mass in total of the polyol (A) and another high-molecular-weight active hydrogen compound.

<Crosslinking agent (E)>

In the present invention, it is possible to use a crosslinking agent (E) as a case requires. By using a crosslinking agent (E), the hardness of the foam may optionally be increased.

The crosslinking agent (E) is preferably a compound having from 2 to 8 active hydrogen-containing groups and a hydroxy value of from 200 to 2,000 mgKOH/g. The crosslinking agent (E) may be a compound which has at least 2 functional groups selected from hydroxy groups, primary amino groups and secondary amino groups. (The above polyol (A2) derived from a natural fat/oil is not included.) Such crosslinking agents (E) may be used alone or in combination as a mixture of two or more of them.

The crosslinking agent (E) having hydroxy groups is preferably a compound having 2 to 8 hydroxy groups, and may, for example, be a polyhydric alcohol, or a low-molecular-weight polyoxyalkylene polyol obtained by adding an alkylene oxide to the polyhydric alcohol or a polyol having a tertiary amino group.

Specific examples of the crosslinking agent (E) having hydroxy groups may be ethylene glycol, 1,4-butanediol, neopentyl glycol, 1,6-hexanediol, diethylene glycol, triethylene glycol, dipropylene glycol, monoethanolamine, diethanolamine, triethanolamine, glycerin, N-alkyl diethanol, a bisphenol A-alkylene oxide adduct, a glycerin-alkylene oxide adduct, a trimethylolpropane-alkylene oxide adduct, a pentaerythritol-alkylene oxide adduct, a sorbitol-alkylene oxide adduct, a sucrose-alkylene oxide adduct, an aliphatic amine-alkylene oxide adduct, an alicyclic amine-alkylene oxide adduct, a heterocyclic polyamine-alkylene oxide adduct, an aromatic amine-alkylene oxide adduct, and a polyol derived from a natural product.

The heterocyclic polyamine-alkylene oxide adduct is obtained by subjecting an alkylene oxide to ring-opening addition polymerization to e.g. piperazine, a short-chain alkyl-substituted piperazine (such as 2-methylpiperazine, 2-ethylpiperazine, 2-butylpiperazine, 2-hexylpiperazine, 2,5-, 2,6-, 2,3- or 2,2-dimethylpiperazine, or 2,3,5,6- or 2,2,5,5-tetramethylpiperazine), or an aminoalkyl-substituted piperazine (such as 1-(2-aminoethyl)piperazine).

The crosslinking agent (E) (amine type crosslinking agent (E)) having primary amino groups or secondary amino groups may, for example, be an aromatic polyamine, an aliphatic polyamine or an alicyclic polyamine.

The aromatic polyamine is preferably an aromatic diamine. The aromatic diamine is preferably an aromatic diamine having at least one substituent selected from the group consisting of an alkyl group, a cycloalkyl group, an alkoxy group, an alkylthio group and an electron-attractive group, in an aromatic nucleus having amino groups bonded thereto, particularly preferably a diaminobenzene derivative.

With respect to the above substituents except for the electron-attractive group, from 2 to 4 substituents are preferably bonded to the aromatic nucleus having amino groups bonded thereto, more preferably at least one at an ortho-position to the position where the amino group is bonded, particularly preferably, they are bonded at all positions.

With respect to the etectron-attractive group, 1 or 2 groups are preferably bonded to the aromatic nucleus having amino groups bonded thereto. The electron-attractive group and another substituent may be bonded to one aromatic nucleus.

The alkyl group, alkoxy group and alkylthio group preferably have at most 4 carbon atoms.

The cycloalkyl group is preferably a cyclohexyl group.

The electron-attractive group is preferably a halogen atom, a trihalomethyl group, a nitro group, a cyano group or an alkoxycarbonyl group, particularly preferably a chlorine atom, a trifluoromethyl group or a nitro group.

The aliphatic polyamine may, for example, be a diaminoalkane having at most 6 carbon atoms, a polyalkylene polyamine, a polyamine obtained by converting some or all hydroxy groups in a low-molecular-weight polyoxyalkylene polyol to amino groups, or an aromatic compound having at least 2 aminoalkyl groups.

The alicyclic polyamine may be a cycloalkane having at least 2 amino groups and/or aminoalkyl groups.

Specific examples of the amine type crosslinking agent (E) may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, and preferred is diethyltoluenediamine (that is one type or a mixture of two or more types of 3,5-diethyl-2,4(or 2,6)-diaminotoluene), dimethylthiotoluenediamine or a diaminobenzene derivative such as monochlorodiaminobenzene or trifluoromethyldiaminobenzene.

The amount of the crosslinking agent (E) is preferably from 0.1 to 20 parts by mass, more preferably from 0.2 to 15 parts by mass, particularly preferably from 0.3 to 10 parts by mass per 100 parts by mass of the total amount of the polyol (A) and another high-molecular-weight active hydrogen compound. When it is at least the lower limit of the above range, moderate hardness can be imparted to the flexible polyurethane foam, and the foaming behavior will be stable. When it is at most the upper limit of the above range, flexibility can be imparted to the flexible polyurethane foam, and mechanical properties such as elongation and tear strength will be good.

<Other Components>

[Foam stabilizer (F)]

In the present invention, a foam stabilizer (F) may be used as the case requires. The foam stabilizer (F) is a component to form good foams. The foam stabilizer (F) may, for example, be a silicone type foam stabilizer (F) or a fluorine type foam stabilizer (F). The amount of the foam stabilizer (F) is preferably from 0.1 to 10 parts by mass per 100 parts by mass in total of the polyol (A) and another high-molecular-weight active hydrogen compound.

[Cell opener]

In the present invention, a cell opener may be used as the case requires. The use of the cell opener is preferred from the viewpoint of the moldability of the flexible polyurethane foam, specifically, the reduction of tight cells. The cell opener is preferably a polyoxyalkylene polyol having an average of from 2 to 8 hydroxy groups, a hydroxy value of from 20 to 100 mgKOH/g and a proportion of ethylene oxide of from 50 to 100 mass%.

[Other compounding ingredients]

In addition to the above components, other compounding ingredients optionally used may, for example, be a filler, a stabilizer, a colorant and a flame retardant.

<Process for producing flexible polyurethane foam>

The flexible polyurethane foam of the present invention is produced by reacting and expansion-molding a reactive mixture containing the polyol (A), the epoxidized natural fat/oil (X), the polyisocyanate compound (B), the catalyst (C), the blowing agent (D) and other components blended as the case requires.

The method of expansion-molding the reactive mixture may be a method in which the reactive mixture is expansion-molded in a closed mold (a molding method) or a method in which the reactive mixture is foamed in an open system (a slab method).

MOLDING METHOD

As the molding method, preferred is a method of directly injecting the reactive mixture into a closed mold (a reaction-injection molding method) or a method in which the reactive mixture is injected into a mold in an open state, followed by closing. As the latter method, it is preferably carried out by a method of injecting the reactive mixture into a mold by using a low pressure foaming machine or a high pressure foaming machine.

The high pressure foaming machine is preferably of a type to mix two liquids. It is preferred that one of the two liquids is the polyisocyanate compound (B) and the other liquid is a mixture of all components other than the polyisocyanate compound (B). Depending on a case, it may be a type to mix three liquids by having the catalyst (C) or the cell opener as a separate component (which is usually used as dispersed or dissolved in a part of a high-molecular-weight polyol).

The temperature of the reactive mixture is preferably from 10 to 40˚C. When the temperature is at least 10˚C, the viscosity of the reactive mixture will not be so high, whereby liquid mixing of the liquids tends to be good. When the temperature is at most 40˚C, the reactivity will not be too high, whereby the moldability or the like tends to be good.

The mold temperature is preferably from 10 to 80˚C, particularly preferably from 30 to 70˚C.

The curing time is preferably from 1 to 20 minutes, more preferably from 3 to 10 minutes, particularly preferably from 3 to 7 minutes. When the curing time is at least the lower limit of the above range, curing will be sufficiently conducted. When the curing time is at most the upper limit of the above range, productivity will be good.

SLAB METHOD

The slab method may be a known method such as a one shot method, a semiprepolymer method or a prepolymer method. For the production of the flexible polyurethane foam, it is possible to use a known production apparatus.

In the production process of the present invention, preferably, as described in the after-mentioned Examples, as the polyol (A) to be reacted with the polyisocyanate compound (B), a specific polyol (A1) obtainable by subjecting PO to ring-opening addition polymerization to an initiator in the presence of the DMC catalyst (a1) and then subjecting EO to ring-opening addition polymerization in the presence of the alkali metal catalyst (a2), is used. By using such a polyol (A1), the polyol (A2) derived from a natural fat/oil and the epoxidized natural fat/oil (X), a flexible polyurethane foam having good cell state on the skin surface, hardness of the foam, rebound resilience and durability, can be obtained. Further, as the polymer-containing mixture has a low viscosity, the liquid flowability when the mixture is poured into a mold tends to be good, and a favorable foam can be obtained even when it has a complicated shape.

The reason why such effects can be obtained is not clearly understood but is considered to be as follows. The polyol (A1) to be used in combination with the polyol (A2) derived from a natural fat/oil and the epoxidized natural fat/oil (X) having such a straight cap structure that a hydrophobic PO block chain is added to the initiator, and to its terminals, a hydrophilic PO block chain is added, and use of the DMC catalyst when PO is subjected to ring-opening addition polymerization to the initiator, contribute to such effects.

The flexible polyurethane foam to be produced by the process of the present invention can be used for an interior material for an automobile (such as seat cushions, seat backs, head rests or arm rests), an interior material for a railway vehicle, bedding, a mattress, a cushion, etc.

It is particularly suitable for seat cushions for an automobile, since it has a high rebound resilience, whereby good cushioning properties are obtained.

EXAMPLES

Now, the present invention will be described in further detail with reference to Examples, but it should be understood that the present invention is by no means limited thereto. In the following, "%" means "mass%" unless otherwise specified.

Measurements were carried out by the following methods.

(HYDROXY VALUE)

The hydroxy values of polyols other than the polymer-dispersed polyol were measured in accordance with JIS K 1557 (2007 edition) (titration method).

If the hydroxy value of the polymer-dispersed polyol is measured by the titration method, the measurement tends to be hindered by a resin precipitation, and therefore, it was obtained by measuring the polymerization balance by calculation in accordance with the above formula (1).

(NUMBER AVERAGE MOLECULAR WEIGHT AND WEIGHT AVERAGE MOLECULAR WEIGHT)

The number average molecular weight (Mn) and the weight average molecular weight (Mw) were measured by the following process.

With respect to some types of monodispersed polystyrene polymers having different polymerization degrees, which are commercially available as standard samples for molecular weight measurement, GPC was measured by using a commercially-available GPC measuring device (tradename: HLC-8220GPC, manufactured by TOSOH CORPORATION), and based on the relation of the molecular weight and the maintaining retention time of each polystyrene, a calibration curve was prepared.

A sample was diluted by tetrahydrofuran to 0.5 mass% and passed through a filter of 0.5 $\mu$m, and GPC of the sample was measured by using the GPC measuring device.

By using the calibration curve, the GPC spectrum of a sample was analyzed by a computer, whereby the number average molecular weight (Mn) and the weight average molecular weight (Mw) of the sample were obtained.

<Example for production of flexible polyurethane foam>

PREPARATION EXAMPLE1: Preparation of TBA-DMC Catalyst

A zinc hexacyanocobaltate complex (DMC catalyst) having tert-butyl alcohol (hereinafter referred to as TBA) coordinated was prepared as follows.

In a 500 mL flask, an aqueous solution comprising 10.2 g of zinc chloride and 10 g of water was put. While the zinc chloride aqueous solution was stirred at 300 revolutions per minute, an aqueous solution comprising 4.2 g of potassium hexacyanocobaltate ($K_3Co(CN)_6$) and 75 g of water was dropwise added to the zinc chloride aqueous solution over a period of 30 minutes. During the dropwise addition, the mixed solution in the flask was kept at 40˚C. After completion of dropwise addition of the potassium hexacyanocobaltate aqueous solution, the mixture in the flask was stirred further for 30 minutes, and a mixture comprising 80 g of tert-butyl alcohol, 80 g of water and 0.6 g of the polyol P was added, followed by stirring at 40˚C for 30 minutes and at 60˚C further for 60 minutes.

The polyol P is a polyoxypropylene diol having an average of 2 hydroxy groups per molecule and a number average molecular weight of 2,000, obtained by subjecting propylene oxide to ring-opening addition polymerization to propylene glycol in the presence of a potassium hydroxide catalyst, followed by dealkalization purification.

The obtained mixture was subjected to filtration using a circular filter plate having a diameter of 125 mm and a quantitative filter paper for particles (manufactured by ADVANTEC Toyo Kaisha, Ltd., No. 5C) under elevated pressure (0.25 MPa) to obtain a solid (cake) containing a double metal cyanide complex catalyst.

The cake was put in a flask, a mixed liquid comprising 36 g of TBA and 84 g of water was added, followed by stirring for 30 minutes, and the mixture was subjected to filtration under elevated pressure under the same conditions as above to obtain a cake.

The cake was put in a flask, and a mixed liquid comprising 108 g of TBA and 12 g of water was further added, followed by stirring for 30 minutes to obtain a slurry having the double metal cyanide complex catalyst dispersed in the TBA-water mixed liquid. 120 g of the polyol P was added to the slurry, and volatile components were distilled off under reduced pressure at 80˚C for 3 hours and at 115˚C further for 3 hours to obtain a DMC catalyst in the form of a slurry (TBA-DMC catalyst, hereinafter sometimes referred to as "a TBA-DMC catalyst slurry"). The concentration (active ingredient concentration) of the DMC catalyst (solid catalyst component) contained in the slurry was 5.33 mass%.

PREPARATION EXAMPLE 2: Preparation of ETB-DMC catalyst

A zinc hexacyanocobaltate complex (DMC catalyst) having ethylene glycol mono-tert-butyl ether (hereinafter referred to as EGMTBE) coordinated was prepared as follows.

In 15 ml of an aqueous solution containing 10 g of zinc chloride, 80 ml of an aqueous solution containing 4 g of $K_3Co(CN)_6$ was dropwise added over a period of 30 minutes. During the dropwise addition, the reaction solution was warmed at 40˚C and stirred.

After completion of the dropwise addition, a mixture comprising 80 ml of EGMTBE as the organic ligand and 80 ml of water was added, and the mixture was heated to 60˚C. After stirring for 1 hour, filtration operation was carried out to obtain a cake containing a double metal cyanide complex.

Then, to the cake containing a double metal cyanide complex, a mixture comprising 40 ml of EGMTBE and 80 ml of water was added, followed by stirring for 30 minutes, and the mixture was subjected to filtration. To a cake containing a double metal cyanide complex obtained by the filtration operation, 100 ml of EGMTBE was further added, followed by stirring, and filtration operation was carried out. A cake containing a double metal cyanide complex obtained by the filtration operation was dried at 80˚C and pulverized to obtain a powdery DMC catalyst (ETB-DMC catalyst).

PRODUCTION EXAMPLE 1: Production of polyol (A1-1)

The initiator (c1) used in this Example was prepared by subjecting PO to ring-opening addition polymerization to glycerin using a KOH catalyst, followed by purification by using KYOWAAD 600S (tradename, synthetic adsorbent, manufactured by Kyowa Chemical Industry Co., Ltd.). It is a polyoxypropylene triol having a number average molecular weight (Mn) of 1,500 and a hydroxy value of 112 mgKOH/g.

As the pressure resistant reactor, a pressure resistant reactor (capacity: 10L, diameter: 200 mm, height: 320 mm) made of stainless steel (JIS-SUS-316) equipped with a stirrer having one pair of anchor blades and two pairs of 45° inclined two-plate paddle blades attached, and having a condenser tube through which cooling water flows provided in the interior of the container, was used.

As measurement of the temperature of the reaction liquid, the liquid temperature was measured by a thermometer placed at the lower portion in the interior of the pressure resistant reactor.

First, into the pressure resistant reactor, 1,000 g of the initiator (c1) and the TBA-DMC catalyst slurry prepared in Preparation Example 1 were charged to obtain a reaction liquid. The amount of the TBA-DMC catalyst slurry charged was such an amount that the metal concentration (hereinafter referred to as the initial catalyst metal concentration) of the TBA-DMC catalyst in the reaction liquid became 46 ppm.

Then, the interior in the pressure resistant reactor was replaced with nitrogen, then the reaction liquid was heated with stirring, stirring was stopped when the liquid temperature reached 135°C (initial temperature), and while stirring was continued, 120 g (12 parts by mass per 100 parts by mass of the initiator) of PO was supplied into the pressure resistant reactor at a rate of 600 g/hr and reacted.

When PO was supplied into the pressure resistant reactor (initiation of the step (a)), the internal pressure of the pressure resistant reactor was once increased and then gradually decreased, and it was confirmed to be the same internal pressure of the pressure resistant reactor immediately before supply of PO (completion of the step (a)). During this reaction, when the decrease in the internal pressure started, the temperature of the reaction liquid was once increased subsequently and then gradually decreased. The maximum temperature of the reaction liquid was 165°C. In this Example, after the temperature increase of the reaction liquid stopped, cooling was conducted. Further, the time for this step (a) was 30 minutes.

Then, PO was supplied and reacted (step (b)), and then EO was reacted (step (c)). That is, while the reaction liquid was stirred, the reaction liquid being cooled to 135°C was confirmed, and while the temperature of 135°C was maintained, 4,728 g of PO was supplied to the pressure resistant reactor at a rate of 600 g/hr. After it was confirmed that the internal pressure no more changed and the reaction was completed, 20 g (active ingredient concentration to the final product: 0.3%) of potassium hydroxide was added, to carry out alkoxylation by dehydration at 120°C for 2 hours. Then, while the reaction liquid was maintained at 120°C, 950 g of EO was additionally supplied to the pressure resistant reactor at a rate of about 200 g/hr. It was confirmed that the internal pressure no more changed and the reaction was completed, the operation of neutralizing and removing the catalyst was carried out by using KYOWAAD 600S (tradename, synthetic adsorbent, manufactured by Kyowa Chemical Industry Co., Ltd.).

Of the polyol (A1-1) thus obtained, the hydroxy value was 16.8 mgKOH/g, the number average molecular weight (Mn) was 13,228, the degree of unsaturation was 0.007 meq/g, the molecular weight distribution (Mw/Mn) was 1.045, and the terminal oxyethylene group content was 14 mass%.

PRODUCTION EXAMPLE 2: Example for production of polyol (A1-2)

A polyether polyol (A1-2) was produced in the same manner as in Production Example 1 except that the initial catalyst metal concentration of the TBA-DMC catalyst slurry was 46 ppm, in the step (a), the PO supply amount was 120 g (12 parts by mass per 100 parts by mass of the initiator), the PO supply rate was 600 g/hr, the initial temperature was 135°C and the maximum temperature was 164°C, in the step (b), the PO supply amount was 4,864 g, and the PO supply rate was 600 g/hr, and in the following step (c), the EO supply amount was 814 g and the EO supply rate was 200 g/hr.

Of the obtained polyol (A1-2), the hydroxy value was 17 mgKOH/g, the number average molecular weight (Mn) was 12,890, the molecular weight distribution was 1.044, and the terminal oxyethylene group content was 12 mass%.

PRODUCTION EXAMPLE 3: Example for production of polyol (A1-3)

A polyether polyol (A1-3) was produced in the same manner as in Production Example 1 except that the amount of use of the initiator (c1) was 1,427 g, the initial catalyst metal concentration of the TBA-DMC catalyst slurry was 47 ppm, in the step (a), the PO supply amount was 143 g (10 parts by mass per 100 parts by mass of the initiator), the PO supply rate was 600 g/hr, the initial temperature was 135°C, and the maximum temperature was 155°C, in the step (b), the PO supply amount was 4,179 g, the PO supply rate was 600 g/hr, and in the following step (c), the EO supply amount was 1,020 g, and the EO supply rate was 200 g/hr.

Of the obtained polyol (A1-3), the hydroxy value was 24 mgKOH/g, the number average molecular weight (Mn) was 9,506, the molecular weight distribution was 1.031, and the terminal oxyethylene group content was 15 mass%.

COMPARATIVE PRODUCTION EXAMPLE 1: Production of polyol (A1-11)

In this Example, PO was subjected to ring-opening addition polymerization to the initiator (c2) in the presence of a KOH catalyst, and then EO was subjected to ring-opening addition polymerization.

That is, as the initiator (c2), a polyoxyalkylene polyol having a number average molecular weight of 1,200, obtained by subjecting PO to ring-opening addition polymerization to pentaerythritol by using a KOH catalyst, was used.

In the same reactor as in Production Example 1, 1,000 g of the initiator (c2), 20 g (active ingredient concentration based on final product: 0.3%) of the KOH catalyst and 5,664 g of PO were charged, followed by stirring at 120°C for 10 hours to carry out ring-opening addition polymerization. Then, 1,023 g of EO was further charged, followed by stirring at 110°C for 1.5 hours to carry out ring-opening addition polymerization thereby to obtain a polyol (A1-11).

Of the obtained polyol (A1-11), the hydroxy value was 28 mgKOH/g, the number average molecular weight (Mn) was 11,029, the molecular weight distribution was 1.040, and the terminal oxyethylene group content was 13 mass%.

COMPARATIVE PRODUCTION EXAMPLE 2: Production of polyol (A1-12)

In this Example, PO was subjected to ring-opening addition polymerization to the initiator (c3) in the presence of a cesium hydroxide (CsOH) catalyst, and then EO was subjected to ring-opening addition polymerization.

As the initiator (c3), a polyoxyalkylene polyol having a number average molecular weight of 1,000, obtained by subjecting PO to ring-opening addition polymerization to glycerin in the presence of a KOH catalyst, followed by dealkalization purification was used.

In the same reactor as in Production Example 1, 953 g of the initiator (c3), 53.3 g (active ingredient concentration based on the final product: 0.8%) of the CsOH catalyst and 4,996 g of PO were charged, followed by stirring at 120°C for 10 hours to carry out ring-opening addition polymerization. Then, 1,060 g of EO was further charged, followed by stirring at 110°C for 1.5 hours to carry out ring-opening addition polymerization thereby to obtain a polyol (A1-12).

Of the obtained polyol (A1-12), the hydroxy value was 24 mgKOH/g, the number average molecular weight (Mn) was 10,037, the molecular weight distribution (Mw/Mn) was 1.035, and the terminal oxyethylene group content was 15 mass%.

COMPARATIVE PRODUCTION EXAMPLE 3: Production of polyol (A1-13)

In this Example, PO was subjected to ring-opening addition polymerization to the initiator (c3) in the presence of the ETB-DMC catalyst obtained in Preparation Example 2, and then a mixture of PO and EO was subjected to ring-opening addition polymerization, and further EO was subjected to ring-opening addition polymerization.

In the same reactor as in Production Example, 1, 953 g of the same initiator (c3) as in Comparative Production Example 2 and 1.33 g (active ingredient concentration based on final product: 0.02%) of the ETB-DMC catalyst powder were charged. After the interior in the reactor was replaced with nitrogen, the reactor was heated with stirring, and when the temperature reached 120°C (initial temperature), heating was stopped, and 95 g (10 parts by mass per 100 parts by mass of the initiator) of PO was supplied while stirring was continued to carry out reaction. The maximum temperature of the reaction liquid was 160°C. After the temperature increase of the reaction liquid stopped, cooling was carried out.

Then, 1,221 g of PO was charged, followed by stirring at 130°C for 5 hours to carry out ring-opening addition polymerization.

Then, a mixture comprising 3,180 g of PO and 353 g of EO was charged, followed by stirring at 130°C for 10 hours to carry out ring-opening addition polymerization. Further, 20 g (active ingredient concentration based on final product: 0.3%) of the KOH catalyst and 1,201 g of EO were charged, followed by stirring at 110°C for 1.5 hours to carry out ring-opening addition polymerization thereby to obtain a polyol (A1-13).

Of the obtained polyol (A1-13), the hydroxy value was 24 mgKOH/g, the number average molecular weight (Mn) was 8,663, the molecular weight distribution (Mw/Mn) was 1.112, the content of the random chain of EO and PO was 5 mass%, and the terminal oxyethylene group content was 17 mass%.

COMPARATIVE PRODUCTION EXAMPLE 4: Production of polyol (A1-14)

In this Example, PO was subjected to ring-opening addition polymerization to the initiator (c1) in the presence of the TBA-DMC catalyst obtained in Preparation Example 1, and then a mixture of PO and EO was subjected to ring-opening addition polymerization, and further EO was subjected to ring-opening addition polymerization.

In the same reactor as in Production Example, 1,429 g of the same initiator (c1) as in Production Example 1 and the TBA-DMC catalyst slurry in such an amount that the initial catalyst metal concentration became 47 ppm, were charged. After the interior in the reactor was replaced with nitrogen, the reactor was heated with stirring, and when the temperature reached 135°C (initial temperature), heating was stopped, and 143 g (10 parts by mass per 100 parts by mass of the initiator) of PO was supplied while stirring was continued to carry out reaction. The maximum temperature of the reaction liquid was 165°C. After the temperature increase of the reaction liquid stopped, cooling was carried out.

Then, 1,729 g of PO was charged, followed by stirring at 130°C for 10 hours to carry out ring-opening addition polymerization.

Then, a mixture comprising 2,142 g of PO and 238 g of EO was charged, followed by stirring at 130°C for 10 hours to carry out ring-opening addition polymerization. Further, 20 g (active ingredient concentration based on final product: 0.3%) of the KOH catalyst and 1,088 g of EO were charged, followed by stirring at 110°C for 1.5 hours to carry out ring-opening addition polymerization thereby to obtain a polyol (A1-14).

Of the obtained polyol (A1-14), the hydroxy value was 24 mgKOH/g, the number average molecular weight (Mn) was 9,804, the molecular weight distribution (Mw/Mn) was 1.064, the content of the random chain of EO and PO was 3.5 mass%, and the terminal oxyethylene group content was 16 mass%.

COMPARATIVE PRODUCTION EXAMPLE 5: Production of polyol (A1-15)

The same procedure as in Comparative Production Example 4 was carried out except that the amounts of use of the materials were changed. That is, in the same reactor as in Production Example 1, 1,000 g of the initiator (c1), the TBA-DMC catalyst slurry in such an amount that the initial catalyst metal concentration became 47 ppm, and 120 g (12 parts by mass per 100 parts by mass of the initiator) of PO were supplied to carry out reaction. The initial temperature was 135°C, and the maximum temperature of the reaction liquid was 164°C.

Then, 1,414 g of PO was charged, followed by stirring at 130°C for 10 hours to carry out ring-opening addition polymerization.

Then, a mixture comprising 3,074 g of PO and 238 g of EO was charged, followed by stirring at 130°C for 10 hours to carry out ring-opening addition polymerization. Further, 20 g (active ingredient concentration based on final product: 0.3%) of the KOH catalyst and 950 g corresponding to the amount of use of EO to be polymerized to the terminals were charged, followed by stirring at 110°C for 1.5 hours to carry out ring-opening addition polymerization thereby to obtain a polyoxyalkylene polyol (A1-15).

Of the obtained polyoxyalkylene polyol (A1-15), the hydroxy value was 17 mgKOH/g, the number average molecular weight (Mn) was 13,481, the molecular weight distribution (Mw/Mn) was 1.077, the content of the random chain of EO and PO was 5 mass%, and the terminal oxyethylene group content was 14 mass%.

As the materials other than the polyol (A1), the following were prepared.

[Polyol (A2) derived from natural fat/oil]

As the polyol (A2-1) derived from soybean oil, a soybean oil polyol having a hydroxy value of 240 mgKOH/g and a number average molecular weight (Mn) of 1,300, having a commercially available epoxidized soybean oil subjected to ring-opening with methanol to have hydroxy groups provided, was used.

[Polymer-dispersed polyol (A3-1)]

As the polymer-dispersed polyol (A3-1) comprising a petroleum type polyoxyalkylene polyol as the base polyol, a polymer-dispersed polyol obtained by polymerizing acrylonitrile and styrene in proportions of 77.5 mass% and 22.5 mass%, respectively, in a base polyol having an average of 3 functional groups and a hydroxy value of 34 mgKOH/g and containing 14.5 mass% of oxyethylene groups at its terminals, was used.

The base polyol is one obtained by subjecting PO to ring-opening addition polymerization to the initiator (c3) in the presence of a KOH catalyst, and then subjecting EO to ring-opening addition polymerization.

That is, in the same reactor as in Production Example 1, 1,767 g of the initiator (c3), 20 g (active ingredient concentration based on final product: 0.3%) of the KOH catalyst and 4,641 g of PO were charged, followed by stirring at 120°C for 8 hours to carry out ring-opening addition polymerization. Then, 1,141 g of EO was further charged, followed by stirring at 110°C for 1.5 hours to carry out ring-opening addition polymerization thereby to obtain a polyoxypropylene oxyethylene polyol, which was used as the base polyol.

[Epoxidized natural fat/oil (X)]

As the epoxidized soybean oil (X-1), ADK CIZER-O-130P (tradename) manufactured by ADEKA CORPORATION was used.

[Polyisocyanate (B-1)]

A mixture comprising 80 mass% of TDI-80 (a mixture of 2,4-TDI and 2,6-TDI in an isomeric ratio of 80 mass% to 20 mass%) and 20 mass% of polymethylene polyphenyl polyisocyanate (common name: polymeric MDI) (manufactured by Nippon Polyurethane Industry Co., Ltd., tradename: CORONATE 1021).

[Catalyst (C-1)]

A 33% dipropylene glycol (DPG) solution of triethylenediamine (manufactured by TOSOH CORPORATION, tradename: TEDA L33).

[Catalyst (C-2)]

A 70% DPG solution of bis-(2-dimethylaminoethyl)ether (manufactured by TOSOH CORPORATION, tradename: TOYOCAT ET).

[Blowing agent (D-1)]

Water.

[Crosslinking agent (E-1)]

A polyoxypropylene oxyethylene polyol having an average of 6 hydroxy groups and a hydroxy value of 445 mgKOH/g and containing 10 mass% of polyoxyethylene groups at its terminals.

[Crosslinking agent (E-2)]

A polyoxypropylene oxyethylene polyol having an average of 6 hydroxy groups and a hydroxy value of 445 mgKOH/g and containing 46 mass% of polyoxyethylene groups at its terminals.

[Foam stabilizer (F-1)]

A silicone type foam stabilizer (manufactured by Dow Coming Toray Co., Ltd., tradename: SZ-1325).

<Evaluation methods>

·The biomass degree of the foam was calculated as the proportion (unit: %) of the mass of materials derived from a natural fat/oil contained in the materials (the polyols, the polyisocyanate, the catalyst, the blowing agent and the like) constituting the reactive mixture, to the total mass of the materials constituting the reactive mixture.
·The viscosity of the reactive mixture was measured by a B type viscometer (TOKI SANGYO CO., LTD.) in accordance with JIS K-1557-5 (2007 edition) at a measurement temperature of 25˚C.
·With respect to the foam physical properties, the core density, the 25% hardness (ILD hardness), the rebound resilience (the whole and the core portion), the compression set and the compression set under humid condition, the hysteresis loss and the like were measured in accordance with JIS K6400 (1997 edition). With respect to the physical properties of the core portion, a sample obtained by removing the skin portion from the center portion of the foam, followed by cutting into a size of 100 mm in length, 100 mm in width and 50 mm in height, was used for the measurement.
·The cell state of the skin surface was evaluated by measuring the average cell size of the skin surface of the foam from above the skin surface by an image processing system apparatus (tradename: Qwin-Pro, manufactured by LEICA CAMERA AG). The cell state was evaluated in such a manner that an average cell size of at most 500 $\mu$m: ○ (excellent), 500 to 700 $\mu$m: △ (good), and 700 pm or larger: × (poor).

Here, the surface on the lower side (the mold bottom side) relative to the foaming direction of the foam was regarded as the skin surface.

EXAMPLE 1

A flexible polyurethane foam was produced in a blend ratio as identified in Table 1. The unit in the blend amount in Table 1 is represented by the isocyanate index with respect to the polyisocyanate compound, and is represented by parts by mass with respect to other components.

First, the polyol (A1-1), the polyol (A2-1) derived from soybean oil, the polymer-dispersed polyol (A3-1), the epoxidized soybean oil (X-1), the crosslinking agent (E-1), the catalyst (C-1), the foam stabilizer (F-1) and the blowing agent (D-1) were mixed to prepare a polyol-containing mixture. The polyol-containing mixture was adjusted to a liquid temperature of 30±1°C. Separately, the polyisocyanate compound (B-1) was adjusted to a liquid temperature of 25t1 °C.

Then, to the polyol-containing mixture, the polyisocyanate compound (B-1) was added, followed by stirring by a high speed mixer (3,000 revolutions per minute) for 5 seconds to obtain a reactive mixture. The reactive mixture was immediately injected into a mold heated at 60°C and closed. As the mold, an aluminum mold having inner dimensions of 400 mm in length, 400 mm in width and 100 mm in height was used.

Then, after curing at 60°C for 7 minutes, a flexible polyurethane foam was taken out from the mold, subjected to crushing and then left to stand in a room (temperature: 23°C, relative humidity: 50%) for 24 hours, and then evaluated. The evaluation results are shown in Table 1.

Crushing is a step of continuously compressing the flexible polyurethane foam taken out from the mold up to 75% of the foam thickness.

EXAMPLES 2 and 3

A flexible polyurethane foam was obtained in the same manner as in Example 1 in a blend ratio as identified in Table 1, and evaluation was carried out. The evaluation results are shown in Table 1.

COMPARATIVE EXAMPLE 1

A flexible polyurethane foam was produced in a blend ratio as identified in Table 1. That is, a flexible polyurethane foam was obtained, and evaluation was carried out, in the same manner as in Example 1 except that the polyol (A1-1) was changed to the polyol (A1-11) obtained in Comparative Production Example 1, and no epoxidized soybean oil (X-1) was used. The evaluation results are shown in Table 1.

COMPARATIVE EXAMPLE 2

A flexible polyurethane foam was produced in a blend ratio as identified in Table 1. That is, a flexible polyurethane foam was obtained, and evaluation was carried out, in the same manner as in Example 1 except that the polyol (A1-1) was changed to the polyol (A1-11) obtained in Comparative Production Example 1. The evaluation results are shown in Table 1.

COMPARATIVE EXAMPLE 3

A flexible polyurethane foam was produced in a blend ratio as identified in Table 1. That is, a flexible polyurethane foam was obtained, and evaluation was carried out, in the same manner as in Example 1 except that the polyol (A1-1) was changed to the polyol (A1-2) obtained in Production Example 2, and no epoxidized soybean oil (X-1) was used. The evaluation results are shown in Table 1.

TABLE 1

| | | | Ex. 1 | Ex. 2 | Ex. 3 | Comp. Ex. 1 | Comp. Ex. 2 | Comp. Ex. 3 |
|---|---|---|---|---|---|---|---|---|
| Blend ratio | Polyol (A) | Polyol (A1-1) | 64.5 | | 64.5 | | | |
| | | Polyol (A1-2) | | 64.5 | | | | 65 |
| | | Polyol (A1-11) | | | | 65 | 64.5 | |
| | | Polyol (A2-1) derived from soybean oil | 7.5 | 6 | 6 | 15 | 7.5 | 15 |
| | | Polymer-dispersed polyol (A3-1) | 20 | 20 | 20 | 20 | 20 | 20 |
| | Epoxidized soybean oil(X-1) | | 8 | 9.5 | 9.5 | - | 8 | - |
| | Catalyst (C-1) | | 0.6 | 0.6 | 0.6 | 0.6 | 0.6 | 0.6 |
| | Catalyst (C-2) | | 0.04 | 0.04 | 0.04 | 0.04 | 0.04 | 0.04 |
| | Blowing agent (D-1) | | 3.4 | 3.4 | 3.4 | 3.4 | 3.4 | 3.4 |
| | Crosslinking agent (E-1) | | 0.75 | 0.75 | 0.75 | 0.75 | 0.75 | 0.75 |
| | Crosslinking agent (E-2) | | 0.75 | 0.75 | 0.75 | 0.75 | 0.75 | 0.75 |
| | Crosslinking agent (E-3) | | 0.5 | 0.5 | 0.5 | 0.5 | 0.5 | 0.5 |
| | Foam stabilizer (F-1) | | 0.6 | 0.6 | 0.6 | 0.6 | 0.6 | 0.6 |
| | Polyisocyanate compound (B-1) (represented by index) | | 100 | 100 | 100 | 100 | 100 | 90 |
| Evaluation | Biomass degree (%) of foam | | 10 | 10 | 10 | 10 | 10 | 10 |
| | Viscosity (mPa·s) of polyol-containing mixture | | 4,000 | 3,800 | 3,700 | 2,200 | 4,000 | 5,900 |
| | Skin surface cell state | | ○ | ○ | ○ | ○ | × | ○ |
| | Skin surface cell size ($\mu$m) | | 295 | 288 | 301 | 327 | 735 | 277 |
| | Core density (kg/m$^3$) | | 48.0 | 46.7 | 46.3 | 43.7 | 46.9 | 46.5 |
| | 25% Hardness (ILD hardness) (N/314 cm$^2$) | | 228 | 170 | 178 | 278 | 231 | 213 |
| | Rebound resilience | Whole (%) | 53 | 59 | 57 | 44 | 52 | 46 |
| | | Core (%) | 64 | 65 | 65 | 49 | 60 | 31 |
| | Hysteresis loss (%) | | 23.9 | 21.1 | 21.8 | 31.9 | 25.3 | 30.7 |
| | Compression set (%) | | 3.3 | 3.2 | 3.3 | 8.1 | 4 | 4.3 |
| | Compression set under humid condition (%) | | 12.1 | 11.1 | 12 | 26.1 | 15.5 | 17.3 |

As shown in results in Table 1, in each of Examples 1 to 3 and Comparative Examples 1 to 3, the polyol (A2-1) derived from soybean oil having a hydroxy value of 231 mgKOH/g was used as part of the polyol (A) to be reacted with the polyisocyanate compound (B), and the biomass degree of the foam was 10%.

In Examples 1 to 3, the viscosity of the polyol-containing mixture was low. Further, the obtained flexible polyurethane foam had a good cell state of the skin surface, a relatively high rebound resilience, and a low hysteresis loss. It had low compression set and compression set under humid condition, and had favorable characteristics as a seat cushion for an automobile.

On the other hand, in Comparative Example 1 in which no epoxidized soybean oil (X-1) was used, the obtained flexible polyurethane foam had a high hardness and a low rebound resilience, and had insufficient cushioning properties. Further, it had insufficient hysteresis loss, compression set and compression set under humid condition, which are indices of the durability of the flexible polyurethane foam. Likewise, in Comparative Example 3 in which no epoxidized soybean oil (X-1) was used, by adjusting the index of the polyisocyanate compound, the obtained flexible polyurethane foam had a moderate hardness, but had insufficient rebound resilience, hysteresis loss, compression set and compression set under humid condition. The viscosity of the polyol-containing mixture was also high as compared with Examples 1 to 3.

In Comparative Example 2, the epoxidized soybean oil (X-1) was added to the bend ratio in Comparative Example 1, and the amount of the polyol (A2-1) derived from soybean oil was reduced correspondingly to achieve a biomass degree of the foam of 10%. In Comparative Example 2, the viscosity of the polyol-containing mixture was decreased as compared with Comparative Example 1. Further, the hardness of the obtained flexible polyurethane foam was reduced, the rebound resilience was high, and good cushioning properties were obtained. Further, the durability was also improved, but the cell size of the skin surface was large, and cell roughening occurred.

EXAMPLE 4 and COMPARATIVE EXAMPLES 4 to 7

A flexible polyurethane foam was produced in a blend ratio as identified in Table 2. Production was carried out in the same manner as in Example 1, and evaluation was carried out. The evaluation results are shown in Table 2. Examples 1 and 2 and Comparative Example 2 in Table 2 are the same as Examples 1 and 2 and Comparative Example 2 in Table 1.

In Table 2, the addition state of PO and EO of the polyoxyalkylene polyol and the catalyst (described as "polyol preparation catalyst" in Table 2) used for preparation of the polyoxyalkylene polyol are also shown. With respect to the addition state of PO and EO, a case where ring-opening addition polymerization of PO was carried out and then ring-opening addition polymerization of EO was carried out is represented as "straight cap", and a case where ring-opening addition polymerization of the mixture of PO and EO was carried out by using the DMC catalyst is represented as "random".

TABLE 2

| | Ex. 1 | Ex. 2 | Ex. 4 | Comp. Ex. 2 | Comp. Ex. 4 | Comp. Ex. 5 | Comp. Ex. 6 | Comp. Ex. 7 |
|---|---|---|---|---|---|---|---|---|
| Addition state of PO and EO | Straight cap | | | | | Random | | |
| Polyol preparation catalyst | TBA-DMC (for ring-opening addition polymerization of PO) and KOH (for ring-opening addition polymerization of EO) | | | KOH | CsOH | ETB-DMC | TBA-DMC | |

(continued)

| | | | Ex. 1 | Ex. 2 | Ex. 4 | Comp. Ex. 2 | Comp. Ex. 4 | Comp. Ex. 5 | Comp. Ex. 6 | Comp. Ex. 7 |
|---|---|---|---|---|---|---|---|---|---|---|
| Blend ratio | Polyol (A) | Polyol (A1-1) | 64.5 | | | | | | | |
| | | Polyol (A1-2) | | 64.5 | | | | | | |
| | | Polyol (A1-3) | | | 64.5 | | | | | |
| | | Polyol (A1-11) | | | | 65 | | | | |
| | | Polyol (A1-12) | | | | | 64.5 | | | |
| | | Polyol (A1-13) | | | | | | 64.5 | | |
| | | Polyol (A1-14) | | | | | | | 64.5 | |
| | | Polyol (A1-15) | | | | | | | | 64.5 |
| | | Polyol (A2-1) derived from soybean oil | 7.5 | 6 | 6 | 7.5 | 6 | 6 | 6 | 6 |
| | | Polymer-dispersed polyol (A3-1) | 20 | 20 | 20 | 20 | 20 | 20 | 20 | 20 |
| | Epoxidized soybean oil (X-1) | | 8 | 9.5 | 9.5 | 8 | 9.5 | 9.5 | 9.5 | 9.5 |
| | Catalyst (C-1) | | 0.6 | 0.6 | 0.6 | 0.6 | 0.6 | 0.6 | 0.6 | 0.6 |
| | Catalyst (C-2) | | 0.04 | 0.04 | 0.04 | 0.04 | 0.04 | 0.04 | 0.04 | 0.04 |
| | Blowing agent (D-1) | | 3.4 | 3.4 | 3.4 | 3.4 | 3.4 | 3.4 | 3.4 | 3.4 |
| | Crosslinking agent (E-1) | | 0.75 | 0.75 | 0.75 | 0.75 | 0.75 | 0.75 | 0.75 | 0.75 |
| | Crosslinking agent (E-2) | | 0.75 | 0.75 | 0.75 | 0.75 | 0.75 | 0.75 | 0.75 | 0.75 |
| | Crosslinking agent (E-3) | | 0.5 | 0.5 | 0.5 | 0.5 | 0.5 | 0.5 | 0.5 | 0.5 |
| | Foam stabilizer (F-1) | | 0.6 | 0.6 | 0.6 | 0.6 | 0.6 | 0.6 | 0.6 | 0.6 |
| | Polyisocyanate compound (B-1) (represented by index) | | 100 | 100 | 100 | 90 | 100 | 100 | 100 | 100 |
| Evaluation | Skin surface cell state | | ○ | ○ | ○ | × | × | × | × | × |
| | Skin surface cell size ($\mu$m) | | 295 | 288 | 304 | 735 | 756 | 779 | 801 | 761 |
| | Rebound resilience | Whole (%) | 53 | 59 | 49 | 52 | 56 | 28 | 48 | 44 |
| | | Core (%) | 64 | 65 | 55 | 60 | 64 | 31 | 59 | 47 |

As shown in results in Table 2, in Example 4 in which a straight cap structure polyol (A1-3) was used, no cell roughening occurred similar to Examples 1 to 3.

Whereas, in Comparative Example 4 in which a straight cap structure was employed but no DMC catalyst was used, and in Comparative Examples 5 to 7 in which although the DMC catalyst was sued, PO and EO were randomly added, cell roughening occurred.

That is, it was confirmed that a flexible polyurethane foam having no cell roughening could be obtained by using, as the polyol (A1), a polyoxyalkylene polyol having a straight cap structure.

EP 2 471 829 A1

INDUSTRIAL APPLICABILITY

The flexible polyurethane foam obtainable by the present invention has a high biomass degree, has a high rebound resilience and has good cushioning properties, and has such characteristics that no cell roughening occurs on the skin surface, and is applicable to an interior material for an automobile, an interior material for a railway vehicle, bedding, etc.

The entire disclosure of Japanese Patent Application No. 2009-231932 filed on October 5, 2009 including specification, claims and summary is incorporated herein by reference in its entirety.

**Claims**

1. A process for producing a flexible polyurethane foam, which comprises reacting and expansion-molding a reactive mixture containing a polyol (A) containing the following polyol (A1) and a polyol (A2) derived from a natural fat/oil, an epoxidized natural fat/oil (X) obtainable by epoxidizing a natural fat/oil having unsaturated bonds by having an oxidizing agent reacted therewith, a polyisocyanate compound (B), a catalyst (C) and a blowing agent (D):

    polyol (A1): a polyoxyalkylene polyol having a hydroxy value of from 5 to 30 mgKOH/g, obtainable by subjecting propylene oxide (b1) to ring-opening addition polymerization to an initiator in the presence of a double metal cyanide complex catalyst (a1) having an organic ligand, and then subjecting ethylene oxide (b2) to ring-opening addition polymerization in the presence of an alkali metal catalyst (a2).

2. The process for producing a flexible polyurethane foam according to Claim 1, wherein the polyol (A1) contains from 5 to 40 mass% of terminal oxyethylene groups.

3. The process for producing a flexible polyurethane foam according to Claim 1 or 2, wherein the mass ratio (A1)/(A2) of the polyol (A1) to the polyol (A2) derived from a natural fat/oil is from 95/5 to 30/70.

4. The process for producing a flexible polyurethane foam according to any one of Claims 1 to 3, wherein the proportion of the epoxidized natural fat/oil (X) is from 1 to 30 parts by mass per 100 parts by mass of the polyol (A).

5. The process for producing a flexible polyurethane foam according to any one of Claims 1 to 4, wherein the reactive mixture further contains a crosslinking agent (E).

6. The process for producing a flexible polyurethane foam according to any one of Claims 1 to 5, wherein the hydroxy value of the polyol (A2) derived from a natural fat/oil is from 20 to 250 mgKOH/g.

7. The process for producing a flexible polyurethane foam according to any one of Claims 1 to 6, wherein the polyol (A2) derived from a natural fat/oil is a polyol derived from soybean oil.

8. The process for producing a flexible polyurethane foam according to any one of Claims 1 to 7, wherein the blowing agent (D) is water.

9. The process for producing a flexible polyurethane foam according to any one of Claims 1 to 8, wherein as the polyisocyanate compound (B), at least one member selected from the group consisting of tolylene diisocyanate, diphenylmethane diisocyanate, polymethylene polyphenyl isocyanate and modified products thereof is used.

10. The process for producing a flexible polyurethane foam according to any one of Claims 1 to 9, wherein the amount of the polyisocyanate compound (B) used is such an amount that the isocyanate index is from 80 to 125.

11. The process for producing a flexible polyurethane foam according to any one of Claims 1 to 10, wherein the expansion-molding is carried out in a closed mold.

12. A flexible polyurethane foam produced by the process as defined in any one of Claims 1 to 11.

13. A seat cushion for an automobile, using the flexible polyurethane foam as defined in Claim 12.

| INTERNATIONAL SEARCH REPORT | International application No. |
|---|---|
| | PCT/JP2010/067470 |

**A. CLASSIFICATION OF SUBJECT MATTER**
*C08G18/40*(2006.01)i, *A47C27/14*(2006.01)i, *C08G101/00*(2006.01)n

According to International Patent Classification (IPC) or to both national classification and IPC

**B. FIELDS SEARCHED**

Minimum documentation searched (classification system followed by classification symbols)
C08G18/00-18/87, A47C1/00-31/12, B60N2/00-2/72

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| A | JP 2008-539314 A (Cargill, Inc.), 13 November 2008 (13.11.2008), claims (particularly, claims 12, 44) & US 2006/0264524 A1 & EP 1888666 A & WO 2006/116456 A1 | 1-13 |
| A | JP 2007-507594 A (Cargill, Inc.), 29 March 2007 (29.03.2007), claims & US 2005/0070620 A1 & EP 1678232 A & WO 2005/033167 A2 | 1-13 |
| A | WO 2006/054657 A1 (Asahi Glass Co., Ltd.), 26 May 2006 (26.05.2006), claims & US 2007/0213420 A1 & EP 1813632 A1 | 1-13 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 December, 2010 (27.12.10) | 11 January, 2011 (11.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/067470 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-291129 A  (Asahi Glass Co., Ltd.), 26 October 2006 (26.10.2006), claims (Family: none) | 1-13 |
| A | JP 2005-320431 A  (Honda Motor Co., Ltd., Toyo Quality One Corp., Asahi Denka Co., Ltd.), 17 November 2005 (17.11.2005), claims (Family: none) | 1-13 |
| A | JP 6-192366 A  (Mitsui Toatsu Chemicals, Inc.), 12 July 1994 (12.07.1994), claims (Family: none) | 1-13 |
| A | JP 4-89817 A  (Mitsui Toatsu Chemicals, Inc.), 24 March 1992 (24.03.1992), claims (Family: none) | 1-13 |

Form PCT/ISA/210 (continuation of second sheet) (July 2009)

**EP 2 471 829 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2616054 B
- JP 2616055 B
- JP 2005320431 A
- JP 2002524627 A
- JP 2003165836 A
- JP 2005015786 A
- JP 7196778 A
- JP 2000513647 A
- JP 2003342361 A
- JP 2009231932 A